(19) Europäisches Patentamt
European Patent Office
Office européen des brevets

(11) **EP 2 362 471 A1**

(12) **EUROPEAN PATENT APPLICATION**
published in accordance with Art. 153(4) EPC

(43) Date of publication:
**31.08.2011 Bulletin 2011/35**

(51) Int Cl.:
***H01M 8/02*** (2006.01)   ***H01M 8/10*** (2006.01)

(21) Application number: **09834559.8**

(22) Date of filing: **17.06.2009**

(86) International application number:
**PCT/JP2009/061011**

(87) International publication number:
**WO 2010/073753 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **22.12.2008 JP 2008325230**

(71) Applicant: **Tokuyama Corporation**
**Shunan-shi, Yamaguchi-ken 745-8648 (JP)**

(72) Inventors:
• **WATAHIKI, Yuki**
**Shunan-shi**
**Yamaguchi 745-8648 (JP)**

• **SADASUE, Kazuyuki**
**Shunan-shi**
**Yamaguchi 745-8648 (JP)**
• **FUKUTA, Kenji**
**Shunan-shi**
**Yamaguchi 745-8648 (JP)**
• **YANAGI, Hiroyuki**
**Shunan-shi**
**Yamaguchi 745-8648 (JP)**

(74) Representative: **Gulde Hengelhaupt Ziebig & Schneider**
**Patentanwälte - Rechtsanwälte**
**Wallstrasse 58/59**
**10179 Berlin (DE)**

(54) **SEPARATION MEMBRANE FOR FUEL CELL, AND METHOD FOR PRODUCTION THEREOF**

(57)    Disclosed is a membrane for a fuel cell, which comprises: a polymer electrolyte membrane which comprises a cross-linked anion-exchange resin having a strongly basic anion-exchange group such as a quaternary ammonium salt group, a quaternary pyridinium salt group and a quaternary imidazolium salt group; and a polymer which is attached on at least one surface of the polymer electrolyte membrane and has a weakly acidic group such as a polyacrylic acid. Also disclosed is a method for producing the membrane.

[Fig. 1]

Fig. 1

EP 2 362 471 A1

**Description**

**TECHNICAL FIELD**

The present invention relates to a membrane for fuel cell, a method for producing thereof, and a membrane-catalyst electrode assembly for fuel cell. More particularly, the present invention relates to a polymer electrolyte membrane for fuel cell, comprising a cross-linked anion-exchange membrane, a method for producing thereof, and a membrane-catalyst electrode assembly for fuel cell.

**BACKGROUND ART**

Ion exchange resin membrane is in wide use as a membrane for cell (e.g. polymer electrolyte fuel cell, redox flow cell or zinc-bromine cell), a membrane for dialysis, etc. Polymer electrolyte fuel cell is used for an ion exchange membrane as the electrolyte. When a fuel and an oxidant are fed continuously into the polymer electrolyte fuel cell, they react with each other, generating a chemical energy. In the fuel cell, the chemical energy generated is taken out as an electric power, and the fuel cell is one of power generation system which is clean and highly efficient.

In recent years, this power generation system has increased its importance for supply of the electric power used in automobile, household and portable devices, because it can be operated at low temperatures and can be produced in a small size.

Polymer electrolyte fuel cell generally has inside a polymer electrolyte membrane functioning as an electrolyte. To the both sides of the polymer electrolyte membrane is each bonded diffusion electrode having a catalyst loaded thereon. In the fuel cell having such a structure, hydrogen gas or a liquid fuel composed of methanol or the like is fed into a chamber (a fuel chamber) in which one diffusion electrode is present, and an oxygen-containing gas as an oxidant (e.g. oxygen or air) is fed into a chamber (an oxidant chamber) in which the other diffusion electrode is present. When, in this state, an external load circuit is connected to the two diffusion electrodes, the fuel cell starts functioning.

Of various fuel cells, direct liquid fuel cell utilizing a liquid fuel (e.g. methanol) per se as the fuel, is easy to handle because the fuel cell uses a liquid fuel, and, moreover, the fuel is inexpensive. For these reasons, the direct liquid fuel cell is expected particularly as a power source of relatively small output, used for portable devices.

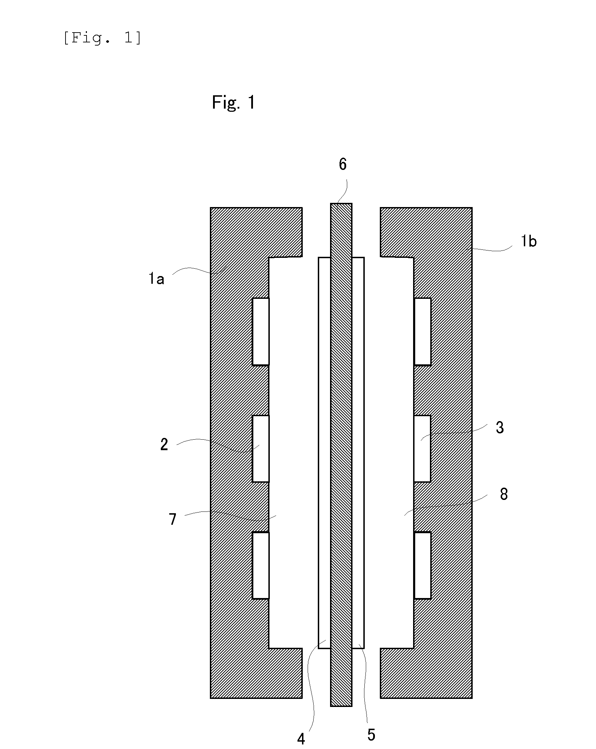

The fundamental structure of polymer electrolyte fuel cell is shown in Fig. 1. In Fig. 1, 1a and 1b are cell partition walls provided in opposing positions. 2 is a groove-shaped fuel passage formed on the inner surface of the partition wall 1a. 3 is a groove-shaped oxidant gas passage formed on the inner surface of the partition wall 1b. 6 is a polymer electrolyte membrane; on one side thereof is formed a fuel chamber side diffusion electrode layer 4, and on other side thereof is formed an oxidant chamber side gas diffusion electrode layer 5. The polymer electrolyte membrane 6 electrically insulates a fuel chamber 7 from an oxidant chamber 8. However, proton can permeate the polymer electrolyte membrane 6.

In this polymer electrolyte fuel cell, when, for example, a cation-exchange electrolytic membrane is used as the polymer electrolyte membrane 6, electricity is generated according to the following reaction. First, in the fuel chamber side diffusion electrode layer 4, the catalyst contained in the electrode contacts with a fuel, generating proton (hydrogen ion). This proton conducts through the polymer electrolyte membrane 6 and migrates to the oxidant chamber 8; in the oxidant chamber side gas diffusion electrode layer 5, the proton reacts with the oxygen in oxidant gas, generating water. Meanwhile, in the fuel chamber side diffusion electrode layer 4, electron (generated simultaneously with the proton) migrates to the oxidant chamber side gas diffusion electrode layer 5 via an external load circuit, giving an electric energy to the external load.

In this polymer electrolyte fuel cell, the energy of reaction is converted into an electric energy and used as such, as described above.

In a polymer electrolyte fuel cell using the cation-exchange electrolytic membrane, a perfluorocarbonsulfonic acid resin membrane has been used most typically as the cation-exchange electrolytic membrane. However, the following problems are pointed out for the cation-exchange fuel cell using the perfluorocarbonsulfonic acid resin membrane.

(i) Since the field of reaction is strongly acidic, only a noble metal catalyst is usable as the catalyst of diffusion electrode layer. Further, the perfluorocarbonsulfonic acid resin membrane is expensive as well and, therefore, there is a limit in cost reduction of fuel cell.
(ii) The perfluorocarbonsulfonic acid resin membrane is low in water retention. Accordingly, it is necessary to supplement water to the resin membrane.
(iii) Since the physical strength of the perfluorocarbonsulfonic acid resin membrane is low, it is difficult to reduce the electrical resistance of the resin membrane by making thinner the resin membrane.
(iv) When the fuel cell uses a liquid fuel (e.g. methanol), the permeability of the liquid fuel through the perfluorocarbonsulfonic acid resin membrane is high. Accordingly, the liquid fuel reaching the oxidant chamber side gas diffusion electrode layer reacts with oxygen or air at the electrode layer, resulting in an increased overvoltage. As a result, a reduction in output voltage of fuel cell takes place.

In order to solve the above problems, particularly the problem (i), it is being investigated to use, in place of the perfluorocarbonsulfonic acid resin membrane, an anion-exchange membrane as the polymer electrolyte membrane; and several proposals have been made (Patent Literatures 1 to 3).

The above-proposed anion-exchange membrane uses, as the substrate, a porous film (made of a polyethylene or the like) superior in dimensional stability, heat resistance, etc. This anion-exchange membrane is a membrane in which the above-mentioned substrate is integrated with a hydrocarbon-based anion-exchange resin comprising a polystyrene in which an anion-exchange group (e.g. quaternary ammonium salt group) has been introduced into an aromatic ring. There is further disclosed, as the hydrocarbon-based anion-exchange membrane, an ion-exchange membrane having a cross-linked structure, obtained by copolymerizing an at least bifunctional, cross-linkable monomer (e.g. divinylbenzene).

In the mechanism of electric energy generation in a polymer electrolyte fuel cell using the above-mentioned anion-exchange membrane as the membrane, the ionic species migrating through the anion-exchange membrane differs from the ionic species migrating through the cation-exchange membrane of a fuel cell using a cation-exchange membrane as the membrane. In the polymer electrolyte fuel cell using an anion-exchange membrane as the membrane, hydrogen or a liquid fuel (e.g. methanol) is fed into the fuel chamber, and oxygen and water are fed into the oxidant chamber. In the gas diffusion electrode 5 of oxidant chamber side, the catalyst contained in the electrode contacts with oxygen and water, generating hydroxide ion ($OH^-$ ion). This hydroxide ion conducts through the polymer electrolyte membrane 6 composed of the above-mentioned anion-exchange membrane and migrates to the fuel chamber 7, and reacts with the fuel in the diffusion electrode 4 of fuel chamber side, generating water. The electron formed in the reaction in the diffusion electrode 4 of fuel chamber side migrates to the gas diffusion electrode 5 of oxidant chamber side through an external load circuit, and, in this case, the energy of the reaction is utilized as an electric energy in the external load.

In the reaction mechanism of a fuel cell using the above-mentioned anion-exchange membrane as the membrane, the field of reaction is not a strongly acidic atmosphere. Accordingly, an inexpensive metal catalyst other than noble metal may be used. As a result, in a direct liquid fuel cell using an anion-exchange membrane as the membrane, the above-mentioned problem (i) is lessened largely and ordinarily the above-mentioned problems (ii) and (iii) can also be lessened greatly.

As to the problem (iv), the following matter is considered. That is, while electricity is flowing, hydroxide ion of large diameter migrates through the membrane from the oxidant chamber side to the fuel chamber side. However, the direction of the hydroxyl ion migration is opposite to the direction of the permeation of liquid fuel. As a result, the migration of liquid fuel is hampered. Further, as described previously, the membrane used is an integrated material of substrate and hydrocarbon-based anion-exchange resin and the hydrocarbon-based anion-exchange resin has a cross-linked structure; therefore, the migration of liquid fuel in membrane is hampered.

As described above, the polymer electrolyte fuel cell using an anion-exchange membrane as the polymer electrolyte membrane is useful and its practical application is expected. However, the fuel cell has a big problem to be solved, as follows. That is, when there is produced a fuel cell using a cross-linked anion-exchange membrane which is low in permeability for methanol or the like and superior in dimensional stability, heat resistance, etc., as mentioned previously, there is a problem of insufficient bondability between the electrolytic membrane and the fuel chamber side diffusion electrode layer and oxidant chamber side gas diffusion electrode layer, each bonded to either one side of the electrolytic membrane.

Each catalyst electrode layer is formed ordinarily using a catalyst (e.g. platinum), an electroconductive substance (e.g. conductive carbon) and an anion-exchange resin for giving ionic conductivity. In bonding the electrolytic membrane with each catalyst electrode layer, ordinarily, each material described and a solvent for dilution are kneaded first to produce a paste. Then, the paste is coated on the surface of the polymer electrolyte membrane, followed by drying and hot-pressing, whereby each catalyst electrode layer is bonded to either one side of the electrolytic membrane.

When there is used, as the polymer electrolyte membrane, the above-mentioned cation-exchange membrane, i.e. a non-cross-linked perfluorocarbonsulfonic acid membrane, this polymer electrolyte membrane, when hot-pressed, is softened and melted. As a result, the catalyst electrode layers are fusion-bonded strongly to the polymer electrolyte membrane. However, when the polymer electrolyte membrane is a cross-linked anion-exchange membrane, no sufficient fusion-bonding takes place and the bonding strength between electrolytic membrane and each catalyst electrode layer is very low.

In case that the bonding between polymer electrolyte membrane and each catalyst electrode layer is not sufficient, the ionic conductivities at their interfaces are low. When there is produced a fuel cell using this membrane for fuel cell, the internal resistance of the fuel cell is large. Further, even if the interfaces of the membrane and the catalyst electrode layers have relatively good ionic conductivities at the initial stage of fuel cell production, the bondability of the membrane and the catalyst electrode layers decreases further with the lapse of use period, owing to the swelling of bonded area by liquid fuel and other reasons. Consequently, there arises, in a short period, a problem of the peeling of catalyst electrode layers from polymer electrolyte membrane.

The present inventors previously proposed a method for increasing the bondability between polymer electrolyte membrane (comprising a cross-linked ion-exchange resin) and catalyst electrode layers (Patent Literature 4). This method comprises adhering, to the surface of a polymer electrolyte membrane, a polymer having a charged group whose polarity is opposite to that of the ion-exchange group possessed by the polymer electrolyte membrane. The polymer electrolyte membrane and the catalyst electrode layers are bonded strongly via the polymer having a charged group of opposite polarity.

The prior art described in the Patent Literature 4 includes a mode of using a cross-linked anion-exchange membrane as the polymer electrolyte membrane and a polymer having a cation-exchange group as the polymer having a charged group of opposite polarity. Specifically explaining, there is disclosed, in the Examples, a mode of using, in combination, a cross-linked anion-exchange membrane having a strongly basic group (a quaternary ammonium salt group) and a polymer (a polystyrenesulfonic acid) having a strongly acid group (a sulfonic acid group) having a polarity opposite to that of the anion-exchange membrane.

Patent Literature 1: JP 1999-135137 A
Patent Literature 2: JP 1999-273695 A
Patent Literature 3: JP 2000-331693 A
Patent Literature 4: WO 2007/004716 Pamphlet

## DISCLOSURE OF THE INVENTION

### Task to Be Achieved by the Invention

In the membrane-catalyst electrode assembly for a fuel cell developed by the present inventors, which is produced by a method of adhering a polymer having a cation-exchange group, to the surface of the above-mentioned, cross-linked anion-exchange membrane, ion pair is formed between the anion-exchange group possessed by the polymer electrolyte membrane and the cation-exchange group possessed by the polymer adhered to the surface of the polymer electrolyte membrane. Meanwhile, ion pair is also formed between the cation-exchange group possessed by the polymer and the anion-exchange resin (ionic conductivity-imparting agent) contained in the catalyst electrode layers. As a result, in the above-mentioned membrane-catalyst electrode assembly for fuel cell, the polymer electrolyte membrane and the catalyst electrode layers are bonded strongly to each other via the polymer having a cation-exchange group. Accordingly, a problem of peeling of catalyst electrode layers and polymer electrolyte membrane during the use of fuel cell is lessened greatly.

The above-mentioned prior art is an extremely effective as a method for obtaining the improved bondability between polymer electrolyte membrane and catalyst electrode layers.

However, the fuel cell produced using the above-mentioned membrane-catalyst electrode assembly for fuel cell is unable to completely prevent occurring of the peeling between the polymer electrolyte membrane and the catalyst electrode layers when used for a long period. The peeling occurs more easily particularly when the generation of electricity by fuel cell is conducted at high temperatures which are advantageous for high output. As a result, the cell output decreases gradually with the lapse of time.

Accordingly, there is also further need to increase the bondability in the case of the above-mentioned mode specifically shown in the Examples (i.e. a mode of combining a cross-linked anion-exchange membrane having a quaternary ammonium salt group as an anion-exchange group, with a polymer having a strongly acidic sulfonic acid group, having a polarity opposite to that of the anion-exchange membrane).

In the Patent Literature 4, there are described, as a general explanation of the anion-exchange group possessed by the cross-linked anion-exchange membrane, not only strongly basic groups (e.g. the above quaternary ammonium salt group) but also many weakly basic groups such as primary to tertiary amino groups, pyridyl group, imidazole group and the like. Further, as a general explanation of the cation-exchange group possessed by the polymer to be adhered to the surface of the polymer electrolyte membrane, there are shown not only the above-mentioned sulfonic acid group but also other acidic groups.

Here, various combinations are considered as the combination of the above two ion-exchange groups. However, no mention is made as to the combinations, other than the combination shown in the Examples, capable of achieving high bondability between polymer electrolyte membrane and catalyst electrode layers.

Under the above background, the present invention aims to provide a polymer electrolyte membrane for fuel cell comprising a cross-linked anion-exchange resin, which membrane has high bondability with catalyst electrode layers and, even when assembled into a fuel cell and used for a long period under a high-temperature severe environment, can strikingly reduce the peeling of catalyst electrode layers.

## Means for Achieving the Task

The present inventors made a study in order to solve the above problems. As a result, it was found that, when the cross-linked anion-exchange membrane used as a polymer electrolyte membrane has a strongly basic anion-exchange group and the polymer to be adhered to the surface of the electrolytic membrane in combination with the strongly basic group of the membrane has a weakly acidic cation-exchange group, the bondability via the polymer between the polymer electrolyte membrane and catalyst electrode layers increases remarkably. The finding has led to the completion of the present invention.

The present invention is as described below.

[1] A membrane for fuel cell, which comprises

a polymer electrolyte membrane comprising a cross-linked anion-exchange resin having a strongly basic anion-exchange group, and
a polymer having a weakly acidic group, adhered to at least one side of the polymer electrolyte membrane.

[2] A membrane for fuel cell, which comprises

a polymer electrolyte c membrane comprising a porous membrane and a cross-linked anion-exchange resin having a strongly basic anion-exchange group, filled in the voids of the porous membrane, and
a polymer having a weakly acidic group, adhered to at least one side of the polymer electrolyte membrane.

[3] The membrane for fuel cell according to [1] or [2], wherein the weight-average molecular weight of the polymer having a weakly acidic group is 8,000 to 1,000,000.

[4] The membrane for fuel cell according to [1] or [2], wherein the adhesion amount of the polymer having a weakly acidic group is 0.0001 to 0.5 mg/cm$^2$.

[5] The membrane for fuel cell according to [1] or [2], wherein the weakly acidic group of the polymer having a weakly acidic group is carboxyl group.

[6] The membrane for fuel cell according to [1] or [2], wherein the polymer having a weakly acidic group is a polyacrylic acid.

[7] The membrane for fuel cell according to [1] or [2], wherein the strongly basic group of the cross-linked anion-exchange resin having a strongly basic anion-exchange group is a quaternary ammonium salt group or a pyridinium salt group.

[8] The membrane for fuel cell according to [1] or [2], wherein the polymer having a weakly acidic group is adhered to at least one side of the polymer electrolyte membrane in such a state that the adhesion amount of the polymer does not differ substantially before and after the immersion of the membrane for fuel cell in a 50 mass % aqueous alcohol solution of 30°C.

[9] The membrane for fuel cell according to [1] or [2], wherein the cross-linked anion-exchange resin having a strongly basic anion-exchange group is obtained by polymerizing a monomers composition which contains a bi- or more functional cross-linkable monomer in an amount of 0.5 to 40 mol % relative to the total polymerizable monomers.

[10] The membrane for fuel cell according to [1] or [2], which is used in a direct liquid fuel cell.

[11] A membrane-catalyst electrode assembly for fuel cell, which comprises

a membrane for fuel cell according to [1] or [2], and
a catalyst electrode layer bonded to at least one side of the membrane, comprising an anion-exchange resin having a strongly basic anion-exchange group and a catalyst substance.

[12] A method for producing a membrane for fuel cell, characterized by contacting at least one side of a polymer electrolyte membrane comprising a cross-linked anion-exchange resin having a strongly basic anion-exchange group, with a solution of a polymer having a weakly acidic group, followed by drying to adhere the polymer having a weakly acidic group to the surface of the polymer electrolyte membrane.

[13] A method for producing a membrane for fuel cell, characterized by contacting at least one side of a polymer electrolyte membrane comprising a porous membrane and a cross-linked anion-exchange resin having a strongly basic anion-exchange group, filled in the voids of the porous membrane, with a solution of a polymer having a weakly acidic group, followed by drying to adhere the polymer having a weakly acidic group to the surface of the polymer electrolyte membrane.

[14] A method for producing a membrane for fuel cell wherein a polymer having a weakly acidic group is adhered to the surface of a polymer electrolyte membrane, which method is characterized by contacting at least one side of a polymer electrolyte membrane comprising a cross-linked anion-exchange resin having a strongly basic anion-exchange group, with a solution of a polymer having a weakly acidic group and then washing the polymer electrolyte membrane having the polymer having a weakly acidic group, adhered to the surface, using a solvent capable of dissolving the polymer having a weakly acidic group.

A method for producing a membrane for fuel cell wherein a polymer having a weakly acidic group is adhered to the surface of a polymer electrolyte membrane, which method is characterized by contacting at least one side of a polymer electrolyte membrane comprising a porous membrane and a cross-linked anion-exchange resin having a strongly basic anion-exchange group, filled in the voids of the porous membrane, with a solution of a polymer having a weakly acidic group and then washing the polymer electrolyte membrane having the polymer having a weakly acidic group, adhered to the surface, using a solvent capable of dissolving the polymer having a weakly acidic group.

**Effects of the Invention**

The membrane for fuel cell, of the present invention uses a cross-linked anion-exchange resin and is superior in dimensional stability, heat resistance and methanol non-permeability. In the membrane-catalyst electrode assembly for fuel cell, of the present invention, the catalyst electrode layers are bonded strongly to the membrane. Therefore, the membrane-catalyst electrode assembly for fuel cell has a small internal resistance and, when the membrane is used in a fuel cell, the fuel cell shows a high output voltage.

In the membrane for fuel cell, of the present invention, a polymer having a weakly acidic group is adhered to the surface of a polymer electrolyte membrane. The anion-exchange resin forming the polymer electrolyte membrane has a strongly basic anion-exchange group; therefore, the strongly basic anion-exchange group forms ion pair with the weakly acidic group of the polymer strongly and very efficiently; thereby, the polymer is fixed on the surface of the polymer electrolyte membrane at a high adhesion strength. This adhesion strength is high as compared with when the polymer has a strongly acidic ion-exchange group and the polymer electrolyte membrane has a strongly basic ion-exchange group.

Particularly when the polymer electrolyte membrane is a highly cross-linked anion-exchange resin and the polymer is a high-molecular (weight-average molecular weight = 8,000 to 1,000,000) polymer having a weakly acidic group, the polymer hardly infiltrates into the ion-exchange resin. As a result, the polymer having a weakly acidic group can be adhered to the surface of the polymer electrolyte membrane in a large amount in a strongly fixed state in which the weakly acidic group forms ion pair with the strongly basic group of the polymer electrolyte membrane.

Therefore, the membrane-catalyst electrode assembly for fuel cell, produced using the polymer electrolyte membrane of the present invention has an extremely high bonding strength between the polymer electrolyte membrane and the catalyst electrode layers. When the present membrane-catalyst electrode assembly for fuel cell is used in a fuel cell and electricity is generated, the bondability between membrane and catalyst electrode layer is strikingly high; when electricity generation is conducted for a long period under severe conditions (e.g. high temperatures), the peeling of catalyst electrode layers takes place hardly and cell output is maintained stably.

In the membrane for fuel cell, of the present invention, ion pair is formed at a high efficiency between the anion-exchange group possessed by the anion-exchange resin constituting the polymer electrolyte membrane and the weakly acidic group possessed by the polymer having a weakly acidic group, and the polymer having a weakly acidic group is fixed strongly to the surface of the polymer electrolyte membrane. When the membrane for fuel cell, of the present invention is used in a fuel cell and electricity is generated, the polymer is in contact with a liquid fuel at the fuel chamber side or, at the oxidant chamber side, with the liquid fuel which crosses thereto over the membrane; however, the polymer hardly dissolves and diffuses in the liquid fuel which is in contact with the polymer. As a result, the migration of the polymer (dissolved in the liquid fuel) to the catalyst electrode layer and resulting poisoning/deactivation of the catalyst are suppressed greatly. Consequently, when the membrane is used in a direct liquid fuel cell, the cell can maintain a high output voltage for a long period.

As described above, the membrane for fuel cell, of the present invention can maintain the excellent characteristics of cross-linked type membrane for fuel cell and yet can reduce the internal resistance of membrane-catalyst electrode assembly for fuel cell, which has been a drawback of conventional membranes. Thus, the membrane for fuel cell, of the present invention is extremely useful in practical application of polymer electrolyte fuel cell.

**BRIEF DESCRIPTION OF THE DRAWING**

Fig. 1 is a schematic view drawing, showing a basic structure of a polymer electrolyte fuel cell.

**EXAPLANATION OF NUMERICAL SYMBOLS**

1a, 1b: Cell partition wall
2: Fuel passage
3: Oxidant gas passage
4: Fuel chamber side diffusion electrode layer
5: Oxidant chamber side gas diffusion electrode layer
6: Polymer electrolyte membrane
7: Fuel chamber
8: Oxidant chamber

**BEST MODE FOR CARRYING OUT THE INVENTION**

The membrane for fuel cell, of the present invention comprises

a polymer electrolyte membrane comprising a cross-linked anion-exchange resin having a strongly basic anion-exchange group, and
a polymer having a weakly acidic group, adhered to at least one side of the polymer electrolyte membrane (hereinafter, this polymer is abbreviated as "weakly acidic group-containing polymer" in some cases). The ionic bond strength between the basic group and the acidic group is stronger when the basic group is a strongly basic group and the acidic group is a weakly acidic group than when they are a strongly basic group and a strongly acidic group. Therefore, the membrane for fuel cell, of the present invention has a structure in which the polymer having the acidic group is bonded very strongly to the surface of the polymer electrolyte membrane. When a catalyst electrode layer is bonded to this polymer electrolyte membrane, they are bonded to each other very strongly by the action described below.

The catalyst electrode layer contains an ion-exchange resin having a basic group in order to impart ion conductivity as described previously. Therefore, of the weakly acidic group of the weakly acidic group-containing polymer adhered to the surface of the polymer electrolyte membrane, the weakly acid group portion present in the vicinity of the interface with the catalyst electrode layer forms ionic bond with the basic group possessed by the catalyst electrode layer. As a result, the polymer electrolyte membrane and the catalyst electrode layer bond to each other strongly in the form of ionic bond through the polymer having a weakly acidic group. That is, between the polymer electrolyte membrane and the catalyst electrode layer, there appear not only a bonding strength based on ordinary affinity but also a very strong bonding strength based on ionic bond; thereby, they are bonded to extremely strongly.

Incidentally, in the present invention, each of the polymer electrolyte membrane, the weakly acidic group-containing polymer adhered thereto, and the ion-exchange resin contained in the catalyst electrode layer include a case having both an anion-exchange group and a cation-exchange group. In such a case, the polarity of these ion-exchange groups refers to the polarity of the ion-exchange group occupying at least half (50 mol % or more) of the total of the two ion-exchange groups.

In the present invention, as the weakly acidic group possessed by the weakly acidic group-containing polymer, there can be used any weakly acidic cation-exchange group of cation-exchange groups known as those of cation-exchange resin. Here, "weakly acidic" means that the acid dissociation constant is small. The acid dissociation constant pKa of the weakly acidic cation-exchange group possessed by the weakly acidic group-containing polymer is preferably 2.5 to 10, more preferably 3 to 7. When the cation-exchange group has a pKa of smaller than 2.5, the acidity is too strong and the cation-exchange group has low formability of ion pair with the anion-exchange group of the polymer electrolyte membrane. When the cation-exchange group has a pKa exceeding 10, the cation-exchange group is unable to sufficiently form ion pair with the strongly basic group of the polymer electrolyte membrane.

As specific examples of the weakly acid group possessed by the weakly acidic group-containing polymer, there can be mentioned phosphoric group, carboxyl group, hydroxyl group, etc. As the weakly acidic group possessed by the weakly acidic group-containing polymer, carboxyl group is particularly preferred because it is a weakly acidic group and its pKa has a proton dissociation ability of the above range. The weakly acidic group may be used singly or in combination of two or more kinds.

The weakly acidic group may be combined with a basic group. In this case, it is necessary that at least half (molar basis) of the ion-exchange groups possessed by the weakly acidic group-containing polymer is the weakly acidic group.

Incidentally, the weakly acidic group may be used in combination with a small amount of a strongly acidic group as long as the effect of the present invention is not impaired.

As specific examples of the weakly acidic group-containing polymer usable in the present invention, there can be mentioned polyacrylic acid, polymethacrylic acid, polyisobutylene maleic acid, polybutadiene maleic acid, polymer obtained by reaction of polybutadiene maleic acid and polyvinyl compound, and derivatives thereof. Polyacrylic acid and polymethacrylic acid are preferred particularly.

The weight-average molecular weight of the weakly acidic group-containing polymer is preferably 8,000 to 1,000,000. The weakly acidic group-containing polymer having the above weight-average molecular weight gives stronger bondability between the polymer electrolytic membrane and the catalyst electrode layer for the following reason. In the present invention, the anion-exchange resin used as the polymer electrolyte membrane is cross-linked. As described later, as one of the methods for adhering the weakly acidic group-containing polymer to the surface of the polymer electrolyte membrane, there is a method of immersing the polymer electrolyte membrane in s solution of the weakly acidic group-containing polymer. In this method, the weakly acidic group-containing polymer, when its weight-average molecular weight is in the above range, hardly infiltrates into the polymer electrolyte membrane which is cross-linked and has a dense structure. As a result, the weakly acidic group-containing polymer is adhered to the surface of the polymer electrolyte membrane at a high density and further forms ion pair with the polymer electrolyte membrane through their ion-exchange groups of opposite polarities, whereby they bond to each other strongly.

The weight-average molecular weight of the weakly acidic group-containing polymer is more preferably 20,000 or larger, particularly preferably 30,000 or larger, most preferably 100,000 or larger because, with such a molecular weight, the infiltration of the weakly acidic group-containing polymer into the polymer electrolyte membrane can be suppressed sufficiently and the bondability between them is higher.

Incidentally, when the weight-average molecular weight of the weakly acidic group-containing polymer exceeds 1,000,000, the dissolution of the weakly acidic group-containing polymer in solvent is difficult in the step of adhering the weakly acidic group-containing polymer to the polymer electrolyte membrane.

In order to obtain a uniform solution of the weakly acidic group-containing polymer, the weight-average molecular weight of the weakly acidic group-containing polymer is preferably 300,000 or smaller, more preferably 250,000 or smaller.

By using the weakly acidic group-containing polymer having the above weight-average molecular weight, the amount of the weakly acidic group-containing polymer adhering to surface of the polymer electrolyte membrane becomes 0.0001 to 0.5 mg/cm$^2$. This adhesion amount is appropriate for obtaining strong bondability between the polymer electrolytic membrane and the catalyst electrode layer.

The adhesion amount can be adjusted by adjusting the concentration of weakly acidic group-containing polymer solution, contact time, etc. employed in the adhesion step.

When the amount of the weakly acidic group-containing polymer adhering to the surface of the polymer electrolyte membrane is 0.001 to 0.5 mg/cm$^2$, the adhesion amount of the weakly acidic group-containing polymer can be determined by the following method.

First, an electrolytic membrane having a weakly acidic group-containing polymer adhered thereon is laminated on the two sides of a germanium optical crystal, to prepare a sample to be measured. Then, the incident angle of a light entering the electrolytic membrane via the germanium optical crystal is set at 45°. Then, the multiple reflection infrared spectrum of the sample is measured by the total reflection absorption spectrum analysis. Using the spectrum obtained, a characteristic absorption intensity based on the weakly acidic group possessed by the polymer is determined.

Meanwhile, the weakly acidic group-containing polymer of known amount is coated on a polyethylene terephthalate film. In a manner similar to the above, the absorption intensity of spectrum is measured. Using the data obtained, there is prepared a calibration curve showing a relation between the amount of weakly acidic group-containing polymer and the absorption intensity of spectrum. Using this calibration curve, there is calculated the adhesion amount (per unit area cm$^2$) of the weakly acidic group-containing polymer corresponding to the absorption intensity of the measured sample (hereinafter, this measurement method is referred to as "ATR method").

In this method, as the germanium optical crystal, there is ordinarily used, one having a size of 20 mm x 50 mm x 3 mm (thickness) and, as the polymer electrolyte membrane used for measurement, one having an area of 10 mm x 45 mm.

Here, the characteristic absorption based on the weakly acidic group possessed by the polymer, when the polymer is, for example, a polymer having carboxyl group, such as polyacrylic acid or the like, is a characteristic absorption based on carbonyl group, in the vicinity of 1,650 to 1,760 cm$^{-1}$.

In the above method, the infrared radiation used for the measurement does not permeate from around the surface layer of the polymer electrolyte membrane deep into the membrane. Therefore, the adhesion amount of the weakly acidic group-containing polymer present in the vicinity of the surface of the polymer electrolyte membrane can be measured accurately. Thus, the substantial amount of the weakly acidic group-containing polymer adhering to the surface of the electrolytic membrane can be determined.

The weakly acidic group-containing polymer on the surface of the polymer electrolyte membrane does not necessarily have uniform adhesion to the membrane. However, the very small difference in the adhesion amount of the weakly acidic group-containing polymer among places of adhesion has substantially no influence on the result of measurement as long as there are used the germanium optical crystal having about the above-mentioned area and the measurement sample (polymer electrolyte membrane) having about the above-mentioned size.

Incidentally, as described later, the counter ion of the anion-exchange membrane used as the polymer electrolyte membrane is generally subjected beforehand to an ion exchange treatment and is in the form of hydroxide ion. The investigation by the present inventors indicates that, when the counter ion species of the anion-exchange group is hydroxide ion, the anion-exchange membrane absorbs carbon dioxide present in the air. As a result, the hydroxide ion (which is the counter ion species) is quickly substituted to carbonate ion and then converted into bicarbonate ion.

As described above, the anion-exchange membrane whose counter ion is hydroxide ion, when left in the air, is ion-exchanged, in a short time, to carbonate ion and further to bicarbonate ion. When, there is present, in the ion-exchange membrane, carbonate ion which is generated by absorption of carbon dioxide present in the air, the measurement of the adhesion amount of weakly acidic group-containing polymer, by the ATR method is considered to be inaccurate. For example, it is considered that the characteristic absorption wavelength of the weakly acidic group overlaps with the absorption wavelength of the carbonate ion, depending upon the kind of the weakly acidic group (e.g. carboxyl group). In this case, accurate measurement is difficult. In such a case, absorption based on the carbonate ion present in the anion-exchange membrane is excluded in the measurement of the adhesion amount of the weakly acidic group-containing polymer by the ATR method. Specifically explaining, immediately after the counter ion of anion-exchange membrane has been converted to hydroxide ion, the anion-exchange membrane is placed in a globe box or the like and the above measurement is conducted in a gas (e.g. nitrogen gas) free from carbon dioxide.

Incidentally, during the operation of fuel cell, hydroxide ion is formed by the catalytic reaction inside the catalyst electrode layer. Therefore, the carbonate ion and/or the bicarbonate ion formed by absorption of carbon dioxide is substituted (ion-exchanged) to the hydroxide ion formed by the catalytic reaction. The resulting carbonate ion and/or bicarbonate ion is discharged out of the system as carbonic acid gas. Accordingly, even if part or all of the counter ion species (hydroxide ion) of the anion-exchange membrane of membrane for fuel cell has been substituted to carbonate ion and/or bicarbonate ion, this membrane can be used as a fuel cell with no problem.

Other than the ATR method, there is a method for measuring the adhesion amount of the weakly acidic group-containing polymer. In this method, first, the membrane for fuel cell, of the present invention is immersed in an equal mass mixed solution of a 0.5 mol/l aqueous hydrochloric acid solution and methanol for long period. By this immersion, the weakly acidic group-containing polymer (which adheres to the surface of the membrane and which may be present also inside the membrane) is completely dissolved in the mixed solution. Then, the amount of the weakly acidic group-containing polymer dissolved in the mixed solution is quantitatively determined by liquid chromatography or the like, to determine the adhesion amount of the polymer (hereinafter, this measurement method is referred to as "solvent immersion method").

The adhesion amount of the weakly acidic group-containing polymer determined by the ATR method is the amount of the weakly acidic group-containing polymer adhering to the surface of the polymer electrolyte membrane.

Meanwhile, the adhesion amount of the weakly acidic group-containing polymer determined by the solvent immersion method is the total adhesion amount of the amount of the weakly acidic group-containing polymer adhering to the surface of the polymer electrolyte membrane and the amount of the polymer present inside the membrane. However, this total adhesion amount determined by this method is confirmed to be ordinarily about the same as the adhesion amount determined by the ATR method.

It is appreciated from the above fact that, when the weakly acidic group-containing polymer having the above-mentioned large weight-average molecular weight is adhered to the crosslinked anion-exchange membrane, the polymer hardly infiltrates into the crosslinked anion-exchange membrane and the most part thereof simply adheres to the surface of the membrane, because the molecular weight is large.

In the ATR method, the measurement accuracy of the adhesion amount of the weakly acidic group-containing polymer is low when the adhesion amount of the polymer is smaller than $0.001$ mg/cm$^2$. Therefore, when the adhesion amount of the weakly acidic group-containing polymer adhering to the surface of the polymer electrolyte membrane is in a range of $0.0001$ mg/cm$^2$ inclusive to $0.001$ mg/cm$^2$ exclusive, the adhesion amount of the weakly acidic group-containing polymer can be determined accurately by the following method (application method) which is an application method of the solvent immersion method.

First, the membrane for fuel cell, of the present invention is subjected to the solvent immersion method, to determine the adhesion amount of the weakly acidic group-containing polymer based on the solvent immersion method. As described previously, in the membrane for fuel cell, of the present invention, the weakly acidic group-containing polymer hardly infiltrates into the membrane and the most part thereof adheres to the surface of the membrane. Therefore, the adhesion amount of the weakly acidic group-containing polymer determined by the solvent immersion method is extremely close to the polymer amount present in the membrane surface but, in an accurate sense, includes the amount of the polymer which infiltrated into the membrane.

In the application method, the substantial infiltration amount of the weakly acidic group-containing polymer is determined by the following method; this substantial infiltration amount is deducted from the adhesion amount determined by the solvent immersion method; thereby, a more accurate adhesion amount on membrane surface is determined.

In the measurement of the substantial infiltration amount, first, the membrane for fuel cell, produced by the same method as for the membrane used in the solvent immersion method, is subjected to sand blasting, at the surface, to scrape off the surface layer in a thickness of 1 $\mu$m. Then, the surface layer-removed membrane for fuel cell is subjected to the solvent immersion method to determine the adhesion amount of weakly acidic group-containing polymer. This adhesion amount is taken as the substantial infiltration amount of weakly acidic group-containing polymer.

Incidentally, in the ATR method, the depth of permeation of the infrared ray used for measurement, through the surface layer of polymer electrolyte membrane is estimated to be generally about 0.4 $\mu$m. Accordingly, by scraping off the surface layer of membrane for fuel cell in a thickness of 1 $\mu$m, an infiltration amount, measured as the adhesion amount on surface of membrane by the ATR method can be excluded.

As a result, in the application method as well, the adhesion amount of weakly acidic group-containing polymer on the surface of membrane for fuel cell can be determined accurately by subtracting the amount of the polymer after scraping-off of the surface portion of the membrane from the amount of the polymer before scraping-off of the surface portion.

In the solvent immersion method and the application method, the membrane used is one ordinarily having an area of 8 cm x 8 cm. With the membrane having about such an area, the fluctuation in the adhesion amount of weakly acidic group-containing polymer on the surface of membrane, even if the fluctuation exists, gives substantially no influence on the result of measurement of adhesion amount.

Incidentally, the adhesion amount of the weakly acidic group-containing polymer on the surface of the polymer electrolyte membrane may be measured by a method other than the above-mentioned methods. That is, any method can be employed which has a correlation to the above methods and can give substantially the same measurement result.

When the adhesion amount of the weakly acidic group-containing polymer on the surface of the polymer electrolyte membrane is smaller than 0.0001 mg/cm$^2$, the amount of the polymer capable of taking part in ionic bond is insufficient. As a result, the bondability between the electrolytic membrane and the catalyst electrode layer is not so good, as compared with the bondability when the adhesion amount is in the above-mentioned range. When the adhesion amount of the weakly acidic group-containing polymer exceeds 0.5 mg/cm$^2$, the electrical resistance of the thin film portion constituted by the weakly acidic group-containing polymer is large as compared with the electrical resistance of the electrolytic membrane constituting the membrane. The adhesion amount of the weakly acidic group-containing polymer is preferably 0.0005 to 0.1 mg/cm$^2$, more preferably 0.0005 to 0.003 mg/cm$^2$.

As to the form of the adhesion of weakly acidic group-containing polymer on the surface of polymer electrolyte membrane, there is no particular restriction. For example, a thin film layer of weakly acidic group-containing polymer may be formed so as to cover the whole part of one side of the polymer electrolyte membrane. Or, a thin film layer of weakly acidic group-containing polymer may be formed on part of one side of the polymer electrolyte membrane. When the weakly acidic group-containing polymer is adhered only to part of the surface of the polymer electrolyte membrane, the area of adhesion of the weakly acidic group-containing polymer is preferably at least 1/2 area per one side of the polymer electrolyte membrane, in order to obtain good bondability between the electrolytic membrane and the catalyst electrode layer.

Incidentally, when the weakly acidic group-containing polymer is adhered to part of the electrolytic membrane, the adhesion amount of the weakly acidic group-containing polymer is defined based on the area to which the weakly acidic group-containing polymer is adhered.

Next, description is made on the polymer electrolyte membrane used in the present invention.
The ion-exchange resin having a strongly basic anion-exchange group, possessed by the polymer electrolyte membrane is cross-linked one. By employing a cross-linked anion-exchange resin, the obtained membrane for fuel cell has superior properties in dimensional stability, heat resistance, mechanical strength, methanol non-permeability, etc. Further, there are suppressed the infiltration of weakly acidic group-containing polymer into electrolytic membrane and resultant decrease in the adhesion amount of the polymer on the surface of electrolytic membrane.
As the anion-exchange resin, there can be used any known cross-linked ion-exchange resin having a strongly basic anion-exchange group, and there is no particular restriction. Here, "strongly basic" means having a large base dissociation constant and refers to a base dissociation constant pKb of preferably 4 or smaller when measured at 25°C.

As specific examples of the strongly basic group, there can be mentioned quaternary ammonium salt group, quaternary pyridinium salt group, quaternary imidazolium salt group, etc. The strongly basic group is particularly preferably quaternary ammonium salt group or quaternary pyridinium salt group because hydroxide ion conductivity is high in the anion exchange resin having such a strongly basic group. These ion-exchange groups may be used singly or in combination of two or more kinds. Further, they may be used in combination with an acidic group. In this case, it is necessary that at least half (based on mol) of the ion exchange groups possessed by the ion-exchange resin is the above-mentioned strongly basic group. Incidentally, a weakly acidic group may be used in combination if the amount thereof is slight and does not give a large influence on the effect of strongly basic group.

When the membrane for fuel cell of the present invention is used in a direct liquid fuel cell, the anion-exchange resin constituting the polymer electrolyte membrane preferably contains a cation-exchange group together with the above-mentioned anion-exchange group. By combining these two ion-exchange groups, the crossing-over of liquid fuel (e.g. methanol) or water can be suppressed. In this case, there is particularly preferred an anion-exchange resin having a quaternary ammonium salt group and a sulfonic group or carboxyl group, in combination. The molar ratio of anion-exchange group and cation-exchange group is preferably 1:0.95 to 1:0.1.

As to the structure of the portion of anion-exchange resin other than anion-exchange group (the portion is hereinafter referred to as "resin skeletal portion" in some cases), there is no particular restriction except that the resin skeletal portion has a cross-linked structure. For example, a fluoroplastic in which hydrogen atom is substituted by fluorine atom, may be used as long as it satisfies the above requirement. Since highly fluorinated fluoroplastics are non-crosslinked in many cases, there is ordinarily used, as the resin skeletal portion, a so-called hydrocarbon type resin in which hydrogen atom is not substituted by fluorine atom.

As specific examples of the resin skeletal portion, there can be mentioned polystyrene type, polyacrylic type, polyamide type, polyether type and polyethersulfone type. In these resins, a carbon-carbon bond is mainly used in the constitution of main chain; therefore, these resins are superior in chemical stability of main chain. Of these resins, a resin whose skeletal portion is a polystyrene type, is preferred particularly because the introduction of desired anion-exchange group thereinto is easy and the raw material thereof is inexpensive.

The membrane of the present invention includes one produced by coating a weakly acidic group-containing polymer on the surface of an electrolytic membrane. Therefore, in this case, the crosslink density of resin skeletal portion is required to be such a level as can substantially suppress the infiltration of weakly acidic group-containing polymer into electrolytic membrane. By employing such a crosslink density, the weakly acidic group-containing polymer coated on the surface of the electrolytic membrane is adhered thereto in a significant amount and retained.

When an electrolytic membrane is produced by copolymerizing a polymerizable monomer having a strongly basic group or a polymerizable monomer into which a strongly basic group can be introduced, with a cross-linkable monomer having an at least bifunctional group, the amount of the cross-linkable monomer is preferably 0.5 to 40 mass %, more preferably 1 to 25 mass % of the total polymerizable monomers.

As to such a cross-linked anion-exchange resin, there may be used, in combination, a plurality of such resins different in strongly basic group, resin skeletal portion, cross-linked structure, etc. Further, there may be added a cross-linked ion-exchange resin having a weakly basic group or a non-cross-linked anion-exchange resin as long as various properties intended by the present invention are not impaired.

As the method for forming a polymer electrolyte membrane comprising the above-mentioned cross-linked anion-exchange resin, there is, for example, a method of subjecting a cross-linked anion-exchange resin having a strongly basic anion-exchange group, to cast molding. More preferably, there is the following method using a substrate (this is referred to also as "reinforcing material"). By using a substrate, the polymer electrolyte membrane obtained is higher in mechanical strength and dimensional stability and can have flexibility.

As the substrate used in the method using a substrate, there can be used any substrate known as the substrate for ion-exchange membrane. A porous film, a nonwoven paper, a woven fabric, a nonwoven fabric, a paper, an inorganic membrane, etc. can be used with no restriction. As the material for the substrate, there is mentioned, for example, a thermoplastic resin composition, a thermosetting resin composition, an inorganic material, or a mixture thereof. Of these substrates, there is preferred a substrate produced using a thermoplastic resin composition as the material, because it is easy to produce and has a high adhesion strength to hydrocarbon type ion-exchange resin.

As the thermoplastic resin composition, there can be mentioned, for example, a polyolefin resin (e.g. a homopolymer or copolymer of $\alpha$-olefins such as ethylene, propylene, 1-butene, 1-pentene, 1-hexene, 3-methyl-1-butene, 4-methyl-1-pentene, 5-methyl-1-heptene and the like); a vinyl chloride-based resin such as polyvinyl chloride, vinyl chloride-vinyl acetate copolymer, vinyl chloride-vinylidene chloride copolymer, vinyl chloride-olefin copolymer or the like; a fluoroplastic such as polytetrafluoroethylene, polychlorotrifluoroethylene, polyvinylidene fluoride, tetrafluoroethylene-hexafluoropropylene copolymer, tetrafluoroethylene-perfluoroalkyl vinyl ether copolymer, tetrafluoroethylene-ethylene copolymer or the like; a polyamide resin such as nylon 6, nylon 66 or the like; and a polyimide resin.

Of these thermoplastic resin compositions, a polyolefin resin is preferred because it is superior in mechanical strength, chemical stability and chemical resistance and have good compatibility particularly with hydrocarbon ion-exchange resins. As the polyolefin resin, a polyethylene resin or a polypropylene resin is particularly preferred and a polyethylene resin is most preferred.

Further, there is preferred a porous film made of a polyolefin resin and there is particularly preferred a porous film made of a polyethylene resin, because it has surface smoothness, good adhesion to catalyst electrode layer, and high strength.

As to the porous film used as the substrate for ion-exchange membrane, its average pore diameter is preferably 0.005 to 5.0 $\mu$m, particularly preferably 0.01 to 2.0 $\mu$m, most preferably 0.015 to 0.4 $\mu$m. The porosity is preferably 20 to 95%, more preferably 30 to 90%, most preferably 30 to 65%. The air permeability (JIS P 8117) is preferably 1,500 seconds or less, more preferably 1,000 seconds or less. The thickness is preferably 5 to 200 $\mu$m, more preferably 5 to 40 $\mu$m, particularly preferably 8 to 20 $\mu$m. By using a porous film having such a thickness, there can be obtained a polymer electrolyte membrane which is thin and yet has sufficient strength.

The above porous film can be obtained by a method described in, for example, JP 1997-216964 A, JP 1997-235399 A,

or JP 2002-338721 A. Or, it is available as a commercial product such as "Hipore" produced by Asahi Chemical Industry Co., Ltd., "U-pore" produced by Ube Industries, Ltd., "Setera" produced by Tonen Tapils Co., Ltd., "Excelpor" produced by Nitto Denko Corporation, or the like.

The polymer electrolyte membrane used in the present invention may contain other components such as plasticizer, inorganic filler and the like as long as the effects of the present invention are not impaired thereby.

The above polymer electrolyte membrane used in the present invention may be produced by any method. Generally, however, it is produced preferably the membrane by the following method.

In the method, first, a monomers composition containing a polymerizable monomer having a strongly basic group or a polymerizable monomer into which a strongly basic group can be introduced, and a bi- or more functional cross-linkable monomer is infiltrated into the pores of the above-mentioned substrate; then, the monomers composition is polymerized; thereafter, a strongly basic group is introduced into the resin obtained, as necessary.

As specific examples of the monofunctional polymerizable monomer having a strongly basic group or the monofunctional polymerizable monomer into which a strongly basic group can be introduced, compounded in the monomers composition, there are mentioned monofunctional aromatic vinyl compounds such as styrene, $\alpha$-methylstyrene, vinyltoluene, 2,4-dimethylstyrene, p-tert-butylstyrene, $\alpha$-halogenated styrene, chloromethylstyrene, vinylnaphthalene and the like; and nitrogen-containing compounds such as vinylpyridine and the like. Of these, monofunctional polymerizable monomers having a halogenoalkyl group, such as $\alpha$-halogenated styrene, chloromethylstyrene and the like are preferred because a quaternary ammonium salt group (which can be used most advantageously as the strongly basic group in the present invention) can be introduced easily. Chloromethylstyrene is most preferred because it can give an anion-exchange membrane of higher ion-exchange group density.

As the at least bifunctional cross-linkable monomer, a bifunctional or trifunctional monomer is used generally. Specifically, there can be mentioned polyfunctional aromatic vinyl compounds such as divinylbenzene, divinybiphenyl, trivinylbenzene and the like; polyfunctional (meth)acrylic acid derivatives such as trimethylolmethane trimethacrylate, methylenebisacrylamide, hexamethylenedimethacrylamide and the like; other polyfunctional polymerizable monomers such as butadiene, chloroprene, divinylsulfone and the like; and so forth. Of these, preferred are polyfunctional aromatic vinyl compounds such as divinylbenzene, divinylbiphenyl, trivinylbenzene and the like.

In the monomers composition, a polymerization initiator is preferably contained in order to polymerize the polymerizable monomers. As the polymerization initiator, any polymerization initiator can be used with no particular restriction as long as it can polymerize the polymerizable monomers. As specific examples of the polymerization initiator, there are mentioned organic peroxides such as octanoyl peroxide, lauroyl peroxide, tert-butyl peroxy-2-ethylhexanoate, benzoyl peroxide, tert-butyl peroxyisobutyrate, tert-butyl peroxylaurate, tert-hexyl peroxybenzoate, di-tert-butyl peroxide and the like. The addition amount of the polymerization initiator may be a known amount ordinarily used in polymerization of polymerizable monomers. In general, the amount is 0.01 to 10 parts by mass per 100 parts by mass of all polymerizable monomers.

The monomers composition may contain a solvent as necessary. The monomers composition may further contain as necessary, besides the polymerizable monomer having a strongly basic group or the polymerizable monomer into which a strongly basic group can be introduced and the at least bifunctional cross-linkable monomer, other monomer copolymerizable with the above monomers and known additives such as plasticizer, organic or inorganic filler and the like. As the copolymerizable other monomer, there are mentioned, for example, acrylonitrile, acrolein and methyl vinyl ketone. The addition amount thereof is preferably 100 parts by mass or less, more preferably 80 parts by mass or less, further preferably 30 parts by mass or less relative to 100 parts by mass of the polymerizable monomer having a strongly basic group or the polymerizable monomer into which a strongly basic group can be introduced.

As the plasticizer, there are mentioned, for example, dibutyl phthalate, dioctyl phthalate, dimethyl isophthalate, dibutyl adipate, triethyl citrate, acetyl tributyl citrate, dibutyl sebacate and the like. The addition amount thereof is preferably 50 parts by mass or less, more preferably 30 parts by mass or less relative to 100 parts by mass of the polymerizable monomer having a strongly basic group or the polymerizable monomer into which a strongly basic group can be introduced.

When non-conductive particles such as layered silicate or the like are compounded in the monomers composition, the polymer electrolyte membrane obtained is improved in methanol non-permeability. In the layered silicate, the average major diameter of primary particles is at least 0.1 time the average pore diameter of the substrate but not larger than 50 $\mu$m. The layered silicate is described in Japanese Patent Application 2003-377454.

When, as the polymerizable monomer having a strongly basic group or the polymerizable monomer into which a strongly basic group can be introduced, there is used a polymerizable monomer having a halogenoalkyl group, the polymer electrolyte membrane obtained may have a lower density. The reason for lower density is presumed to be that part of the halogenoalkyl group is decomposed during the polymerization, generating chlorine gas or hydrogen chloride gas as the by-product. In order to prevent this problem, an epoxy group-containing compound is compounded in the polymerizable composition. As the epoxy group-containing compound, there are mentioned epoxidized vegetable oils such as epoxidized soybean oil, epoxidized linseed oil and the like; their derivatives; terpene oxide, styrene oxide and their derivatives; epoxidized α-olefins; epoxidized polymers; and so forth. The addition amount of the epoxy group-containing compound is preferably 1 to 12 parts by mass, more preferably 3 to 8 parts by mass relative to 100 parts by mass of the polymerizable monomer having a strongly basic group or the polymerizable monomer into which a strongly basic group can be introduced.

In producing the polymer electrolyte membrane, the above-mentioned monomers composition is contacted with a substrate.

As the method for the contact, there are mentioned, for example, a method of coating the monomers composition on a substrate, a method of spraying the monomer composition on a substrate, and a method of immersing a substrate in the monomers composition.

The method by immersion is preferred particularly because production of the membrane is easy. The time of immersion differs depending upon the kind of substrate or the formulation of monomers composition but, in general, it is 0.1 second to ten-odd minutes.

In the polymerization of the monomers composition, a known polymerization method can be employed with no restriction. There is generally employed a method of heat-polymerizing a monomers composition containing a polymerization initiator composed of the above-mentioned peroxide. This method is preferred because the operation is easy and the monomers composition can be polymerized relatively uniformly. In the polymerization, it is preferred that the monomers composition is polymerized in a state that the surface of the substrate is covered with a film of polyester or the like. By covering the substrate surface with a film, the hindrance of polymerization by oxygen can be prevented and the surface of the electrolytic membrane obtained can be made smooth; further, by covering the substrate surface with a film, the excessive portion of the monomers composition is removed and a thin, uniform polymer electrolyte membrane can be obtained.

When the monomers composition is heat-polymerized, there is no particular restriction as to the polymerization temperature, and a known condition can be selected appropriately. The polymerization temperature is generally 50 to 150°C, preferably 60 to 120°C. Incidentally, when the monomers composition contains a solvent, the solvent may be removed prior to the polymerization.

The polymerization by the above method gives a membrane-shaped material. In producing the membrane-shaped material,

when a polymerizable monomer having a strongly basic group is used as the polymerizable monomer, the membrane-shaped material is not subjected to any further treatment and can be used per se as a polymer electrolyte membrane. When there is used, as the polymerizable monomer, a polymerizable monomer into which a strongly basic group can be introduced, a strongly basic group is introduced into the membrane-shaped material obtained.

There is no particular restriction as to the method for introduction of strongly basic group, and a known method can be employed appropriately. For example, when there is used, as the polymerizable monomer, a polymerizable monomer having a halogenoalkyl group, the halogenoalkyl group contained in the resin obtained is converted into a quaternary ammonium group.

As the method for quaternization, an established method may be used. Specifically explaining, there is mentioned a method of immersing the membrane-shaped material obtained by polymerization, in a solution containing a tertiary amine such as trimethylamine, triethylamine, dimethylaminoethanol or the like, at 5 to 50°C for at least 10 hours.

When vinylpyridine is used as the polymerizable monomer, there is mentioned a method of contacting the membrane-shaped material obtained by polymerization, with methyl iodide or the like. Incidentally, even when a polymerizable monomer having a strongly basic group is used as the polymerizable monomer, if a strongly basic group can be introduced into the membrane-shaped material obtained, a strongly basic group may be further introduced thereinto as necessary. In this case, the density of anion-exchange group becomes higher.

The polymer electrolyte membrane obtained by the above method has ordinarily a quaternary ammonium salt group containing halogeno ion as the counter ion. Since the polymer electrolyte membrane is used as a membrane for fuel cell, of hydroxide ion conduction type, the counter ion of the quaternary ammonium salt group is generally ion-exchanged to hydroxyl ion in order to produce a fuel cell of high output.

The ion-exchange of the counter ion of quaternary ammonium salt group into hydroxide ion is conducted by an established method. The change of counter ion is conducted ordinarily by immersing the polymer electrolyte membrane composed of an anion-exchange membrane, in an aqueous alkali hydroxide solution such as aqueous sodium hydroxide solution, aqueous potassium hydroxide solution or the like. The concentration of the aqueous alkali hydroxide solution is not particularly restricted but is about 0.1 to 2 mol/L. The immersion temperature is 5 to 60°C, and the immersion time is about 0.5 to 24 hours.

As to the polymer electrolyte membrane obtained by the above method, the membrane resistance differs depending upon the composition of the monomers used, the kind of strongly basic group, the kind of substrate, etc. However, the membrane resistance is ordinarily 0.005 to 1.5 $\Omega \cdot cm^2$, more preferably 0.01 to 0.8 $\Omega \cdot cm^2$, most preferably 0.01 to 0.5 $\Omega \cdot cm^2$, in a 0.5 mol/L aqueous sodium chloride solution. It is practically difficult technically to achieve a membrane resistance of less than 0.005 $\Omega \cdot cm^2$. When the membrane resistance exceeds 1.5 $\Omega \cdot cm^2$, the membrane

resistance is too high and, when such a membrane is used as a membrane for fuel cell, the fuel cell has a low output.

In order to control the membrane resistance in the above range, it preferred to control the anion-exchange capacity at 0.2 to 5 mmol/g, preferably at 0.5 to 3.0 mmol/g.

The water content of the polymer electrolyte membrane composed of an anion-exchange membrane is preferably at least 7%, more preferably at least 10% so that there is no reduction in hydroxide ion conductivity, caused by drying. The water content is generally kept at about 7 to 90%. In order to obtain a water content of this range, there are appropriately controlled the kind of anion-exchange group, the capacity of anion exchange, the degree of cross-linking, etc.

Ordinarily, the thickness of the polymer electrolyte membrane is preferably 5 to 200 $\mu$m, more preferably 5 to 40 $\mu$m, most preferably 8 to 20 $\mu$m, from the standpoints of keeping the membrane resistance low and securing a mechanical strength necessary for the supporting membrane.

The burst strength of the polymer electrolyte membrane is preferably 0.08 to 1.0 MPa. When the burst strength is less than 0.08 MPa, the polymer electrolyte membrane is inferior in mechanical strength; therefore, when the membrane is set in a fuel cell, the membrane may have cracks. Also, a carbon paper is ordinarily used as a gas diffusion electrode; the ends of the fibers constituting the carbon paper protrude outward from the surface of the carbon paper, in some cases; in such cases, the fiber ends stick to the polymer electrolyte membrane, which may generate pinholes therein. Further, the burst strength is preferably at least 0.1 MPa in order to assure stable operation of fuel cell for long-term. In general, it is possible to produce a polymer electrolyte membrane whose burst strength upper limit is as high as 1.0 MPa.

As to the method for adhering the weakly acidic group-containing polymer to the surface of the polymer electrolyte membrane composed of an anion-exchange membrane, there is no particular restriction. For example, there is a method of coating a solution of the weakly acidic group-containing polymer on a polytetrafluoroethylene sheet, followed by drying, to form a thin film of the weakly acidic group-containing polymer on the sheet, and then hot-pressing the thin film formed on the sheet, to the polymer electrolyte membrane for transferring.

There is also a method of plasma-polymerization using a raw material monomer for weakly acidic group-containing polymer, and depositing a weakly acidic group-containing polymer on the surface of a polymer electrolyte membrane. However, the following method is preferred in view of the easiness of production and the bondability of catalyst electrode layer to membrane for fuel cell.

That is, it is a method of contacting a weakly acidic group-containing polymer solution on at least one side of the above-mentioned polymer electrolyte membrane, followed by drying, to adhere a weakly acidic group-containing polymer on the surface of the polymer electrolyte membrane in an amount of 0.0001 to 0.5 mg/cm$^2$.

In the above method, there is no particular restriction as to the solvent used for dissolving the weakly acidic group-containing polymer. The solvent is appropriately selected depending upon the weight-average molecular weight and chemical structure of the weakly acidic group-containing polymer to be dissolved in the solvent. As the solvent, there are mentioned specifically alcohols, such as methanol, ethanol, 1-butanol, 2-ethoxyethanol and the like; aliphatic hydrocarbons such as hexane, cyclohexane, heptane, 1-octane and the like; aliphatic acids such as octanoic acid and the like; amines such as dimethyloctylamine and the like; aromatic hydrocarbons such as toluene, xylene, naphthalene and the like; ketones such as acetone, cyclohexanone, methyl ethyl ketone and the like; ethers such as dibenzyl ether, diethylene glycol dimethyl ether and the like; halogenated hydrocarbons such as methylene chloride, chloroform, ethylene bromide and the like; alcohol esters of aromatic acids or aliphatic acids (e.g. dibutyl phthalate, dioctyl phthalate, dimethyl isophthalate, dimethyl adipate, triethyl citrate, acetyl tributyl citrate and dibutyl sebacate); alkyl phosphates; and water.

There is no particular restriction as to the concentration of the weakly acidic group-containing polymer in the solution thereof. However, the concentration is preferably 0.005 to 8 mass %, more preferably 0.02 to 2 mass %, particularly preferably 0.05 to 1 mass %. When the concentration is lower than 0.005 mass %, a longer time is needed in order to adhere a required amount of the weakly acidic group-containing polymer to the polymer electrolyte membrane and, moreover, the adhesion amount tends to be insufficient. In this case, in the membrane-catalyst electrode assembly for fuel cell, produced using the membrane for fuel cell, of the present invention, the bondability between the membrane and the electrode layer may be insufficient. When the concentration exceeds 8 mass %, the weakly acidic group-containing polymer adheres to the surface of the polymer electrolyte membrane in an amount more than necessary, and the membrane-catalyst electrode assembly for fuel cell, produced using the membrane obtained tends to have a high resistance. As described later, the weakly acidic group-containing polymer adhering excessively to the membrane for fuel cell can be removed by employing the method of immersing the membrane in an aqueous methanol solution, etc. However, when the concentration exceeds 8 mass %, even if the above treatment for removal is conducted, it is difficult to make substantially zero the difference in adhesion amounts of the weakly acidic group-containing polymer before and after the immersion of membrane in aqueous methanol solution.

Then, in the method of adhering the weakly acidic group-containing polymer, the weakly acidic group-containing polymer solution is contacted with the polymer electrolyte membrane. Preferably, the polymer electrolyte membrane is beforehand changed into a hydroxyl ion form by an ion-exchange treatment. By beforehand changing the polymer electrolyte membrane into a hydroxyl ion form, an ion pair formation with the weakly acidic group-containing polymer becomes sufficient.

As to the method of contact between the weakly acidic group-containing polymer solution and the polymer electrolyte membrane, there is no particular restriction. There are mentioned, for example, a method of coating the weakly acidic group-containing polymer solution on the polymer electrolyte membrane, a method of spraying, and a method of immersing the polymer electrolyte membrane in the weakly acidic group-containing polymer solution. The method of coating or immersion is preferred for the easy operation. In the method of immersion, the time of immersion of the polymer electrolyte membrane differs depending upon the kinds of polymer electrolyte membrane and weakly acidic group-containing polymer, the concentration of weakly acidic group-containing polymer and the solvent used. The immersion time is generally preferred to be 1 minute to 24 hours. Immersion of at least 5 minutes is preferred in order to form ionic bond between the ion-exchange group of polymer electrolyte membrane and the weakly acidic group of weakly acidic group-containing polymer and strongly adhere the weakly acidic group-containing polymer to the polymer electrolyte membrane.

Meanwhile, the immersion time is preferred not to exceed 15 hours. When the immersion time exceeds 15 hours, the weakly acidic group-containing polymer adheres to the electrolytic membrane in an amount more than required and the membrane-catalyst electrode assembly for fuel cell may have a higher resistance. Further, the weakly acidic group-containing polymer adheres to the electrolytic membrane in an amount more than required and there may be a difference in adhesion amounts before and after the later-described immersion in aqueous methanol solution.

Then, the polymer electrolyte membrane immersed in the weakly acidic group-containing polymer solution is taken out of the solution and, as necessary, drying is conducted to remove the solvent. Thereby, a membrane for fuel cell, of the present invention is obtained. When the solvent used for dissolving the weakly acidic group-containing polymer has a high dielectric constant or when the solubility of the weakly acidic group-containing polymer in the solvent is high, formation of ion pair may be insufficient between the strongly basic group of electrolytic membrane and the weakly acidic group of weakly acidic group-containing polymer. In this case, the electrolytic membrane is dried, whereby formation of ion pair can be promoted.

As to the drying method, there is no particular restriction, and drying may be conducted at 0 to 100°C for 1 minute to 5 hours depending upon the concentration of the weakly acidic group-containing polymer solution used and the solvent used. For thorough drying, hot air may be sprayed onto the electrolytic membrane after ion pair formation, or reduced pressure may be used for drying. Drying in an inert atmosphere such as argon or nitrogen may be conducted. The drying is conducted preferably with a tension being applied to the electrolytic membrane by fixing the electrolytic membrane after ion pair formation to a frame. This method of drying with a tension being applied enables uniform removal of solvent. As a result, the weakly acidic group-containing polymer adheres uniformly to the electrolytic membrane surface.

Incidentally, ordinarily in the polymer electrolyte membrane obtained above, a layer composed of a weakly acidic group-containing polymer is laminated on the surface of a hydrocarbon form anion-exchange membrane of hydroxide ion form or such a membrane whose hydroxide ion has been changed partially or wholly to carbonate ion or bicarbonate ion. Therefore, the membrane is preferably converted to hydroxide ion form as completely as possible before it is used in a fuel cell. For converting the membrane to a hydroxide ion form, there is a method of immersing the membrane in an aqueous solution of potassium hydroxide or the like.

The membrane for fuel cell, of the present invention can be obtained by the method described above. This membrane for fuel cell can be preferably used as a membrane for hydrogen fuel cell or direct liquid fuel cell. However, the weakly acidic group-containing polymer adheres to the polymer electrolyte membrane in an amount more than required, depending upon the kind of the weakly acidic group-containing polymer used, the concentration of the solution of the polymer, etc., which may increase the resistance of the obtained membrane-catalyst electrode assembly for fuel cell.

A further investigation in depth revealed that, even in a fuel cell produced using the membrane produced as above, the long-term use of the fuel cell might reduce the output of cell. The present inventors made a study on this problem. As a result, it was confirmed that the reduction in cell output was caused by the deactivation of the catalyst loaded on the catalyst electrode layer.

The process of this catalyst deactivation is described in detail below.

The weakly acidic group-containing polymer is adhered to the surface of the membrane for fuel cell produced by the above method. The weakly acidic group-containing polymer includes, in some cases, very small amount of such a polymer which is not forming ion pair with the strongly basic anion-exchange group possessed by the polymer electrolyte membrane. This weakly acidic group-containing polymer which is not forming ion pair, dissolves in a liquid fuel (e.g. an aqueous methanol solution) or in a liquid fuel which arrives by crossing-over, in power generating of fuel cell. The liquid fuel in which the weakly acidic group-containing polymer dissolves, diffuses into the catalyst electrode layer, causing the poisoning of catalyst by weakly acidic group-containing polymer.

In order to suppress the catalyst poisoning, it is preferred to wash the obtained membrane for fuel cell, with a solvent to remove, from the membrane, the weakly acidic group-containing polymer which adheres to the membrane but is not forming ion pair.

As to the solvent used for the washing, there is no particular restriction as long as the solvent is capable of dissolving the weakly acidic group-containing polymer adhering to the membrane. The solvent is appropriately selected depending upon the weight-average molecular weight and chemical structure of weakly acidic group-containing polymer. Specifically explaining, there can be used the solvent used in the preparation of a weakly acidic group-containing polymer solution in the adhesion step.

As to the method of washing, there is no particular restriction. However, there is preferred, from the easiness of the operation, a washing method of immersing the polymer electrolyte membrane to which the weakly acidic group-containing polymer is adhered, in the above-mentioned organic solvent.

As to the condition of washing by immersion, there is no particular restriction. However, the washing is preferably conducted by immersing the polymer electrolyte membrane to which the weakly acidic group-containing polymer is adhered, in a solvent of 0 to 100°C for 10 minutes to 10 hours. For a higher washing efficiency, it is effective to repeat the washing 2 to 5 times by using a fresh solvent each time. In this case, the total immersion time is preferably 10 minutes to 10 hours.

Then, the polymer electrolyte membrane to which the weakly acidic group-containing polymer is adhered, is taken out of the solvent used for washing, followed by drying, to remove the solvent. As the method for drying, there is no particular restriction as long as the method enables substantially no presence of solvent in the membrane for fuel cell. The drying is conducted in the atmosphere at 0 to 100°C for 1 minute to 5 hours depending upon the kind of the solvent used in washing. For thorough drying, the drying may be conducted by spraying hot air to the electrolytic membrane, or under reduced pressure. Or, the drying may be conducted in an inert atmosphere such as argon, nitrogen or the like. Further, the drying is conducted preferably with a tension being applied to the washed electrolytic membrane by, for example, fixing the membrane to a frame. By conducting the drying with a tension being applied, there can be prevented the non-uniform removal of solvent and resultant generation of strain in membrane for fuel cell.

Incidentally, the membrane for fuel cell after the above washing, similarly to the non-washed membrane for fuel cell, is preferably immersed in an aqueous alkali (e.g. potassium hydroxide) solution. By this immersion, the membrane comes to have more sufficient ion-exchange ability.

In the present invention, preferably, the polymer electrolyte membrane to which the weakly acidic group-containing polymer is adhered, is washed by the above-mentioned washing method to remove, from the electrolytic membrane, a free weakly acidic group-containing polymer which is not forming ionic bond with the electrolytic membrane. By this washing operation, there is substantially no difference in the amounts of the weakly acidic group-containing polymer adhering to the electrolytic membrane before and after the immersion of the electrolytic membrane (to which the weakly acidic group-containing polymer is adhered) in a 50 mass % aqueous methanol solution of 30°C. In such a membrane containing substantially no free, weakly acidic group-containing polymer, when it is assembled into a membrane-catalyst electrode assembly for fuel cell, the resistance hardly becomes excessively high. Further, when this membrane for fuel cell is assembled into a fuel cell and when the fuel cell is subjected to long-term electricity generation, there hardly occurs the deactivation of the catalyst contained in the catalyst electrode layer.

Incidentally, in the present invention, the state [in which there is substantially no difference in the amounts of the weakly acidic group-containing polymer adhering to the electrolytic membrane before and after the immersion of the electrolytic membrane (to which the weakly acidic group-containing polymer is adhered) in an aqueous methanol solution of the above-mentioned temperature and concentration], includes a state in which there is no change in adhesion amounts before and after immersion, a state in which the adhesion amount changes in the range of measurement error, before and after immersion, and a state in which the adhesion amount changes in a small range which gives substantially no effect on bondability, before and after immersion. Specifically explaining, it is such a state that the adhesion amount after immersion is reduced in an amount of 10% or less, more preferably 5% or less relative to the adhesion amount before immersion.

The decrease in mass, taking place after the washing of the membrane for fuel cell by solvent, is caused by the removal of the weakly acidic group-containing polymer portion which is not forming ion pair, of the whole weakly acidic group-containing polymer adhering to the surface of the polymer electrolyte membrane. In general, the upper limit of the adhesion amount of the weakly acidic group-containing polymer to the polymer electrolyte membrane after washing is 0.005 mg/cm$^2$, preferably 0.0025 mg/cm$^2$.

The membrane-catalyst electrode assembly for fuel cell of the present invention is obtained by bonding a catalyst electrode layer to at least one side of the above-mentioned membrane for fuel cell. As the catalyst electrode layer, there can be used, with no particular restriction, a known catalyst electrode layer used in polymer electrolyte fuel cell.

In general, the catalyst electrode layer contains metal particles functioning as a catalyst and a binder resin for binding the metal particles. For bonding the catalyst electrode layer to the membrane for fuel cell, there is a method of bonding an electrode made of a porous material having a catalyst electrode layer loaded thereon, to the membrane for fuel cell, of the present invention. There is also a method of bonding only a catalyst electrode layer to the membrane for fuel cell and then bonding thereto an electrode made of a porous material.

As the binder resin which is a component of the catalyst electrode layer, there can be used a resin having no ionic group, such as polytetrafluoroethylene or the like. However, the binder resin preferably contains a hydroxide ion-conductive substance so that the hydroxide ion conductivity in catalyst electrode layer can be enhanced, the internal resistance of fuel cell can be reduced, and the catalyst can be utilized more efficiently. There is no particular restriction as to the hydroxide ion-conductive substance as long as it is a substance having an anion-exchangeable functional group whose counter ion is hydroxide ion. Ordinarily, there are preferably used known anion-exchange resins, and polymers into which an anion-exchange group has been introduced by a known treatment such as alkylation, amination or the like. As specific examples, there are mentioned alkylation products of amino group-containing polymers such as poly(4-vinylpyridine), poly(2-vinylpyridine), polyethyleneimine, polyallylamine, polyaniline, polydiethylaminoethylstyrene, polyvinylimidazole, polybenzimidazole, polydimethylaminoethyl methacrylate and the like; derivatives thereof; and complete or partial nitrogen atom quaternization products of halogenated alkyl-containing polymers (e.g. chloromethylated polystyrene, bromomethylated polystyrene, and chlorobutylated polystyrene) or derivatives thereof. These anion-exchange resins may be used singly or in combination of two or more kinds.

The ion-exchange group of the anion-exchange resin used in the catalyst electrode layer is preferably strongly basic group, more preferably quaternary ammonium salt group, in particular. The reason is that the strongly basic group forms ionic bond strongly with the weakly acidic group of the weakly acidic group-containing polymer, as in the case of the polymer electrolyte membrane. By using the anion-exchange resin having a strongly basic anion-exchange group, as the ion-conductive substance constituting the catalyst electrode layer, the bonding between membrane for fuel cell and catalyst electrode layer via weakly acidic group-containing polymer becomes most strong in the membrane-catalyst electrode layer assembly for fuel cell, produced using the membrane for fuel cell of the present invention.

As to the catalyst in the catalyst electrode layer, there is no particular restriction as long as it is a metal which promotes the oxidation reaction of fuel (e.g. hydrogen or methanol) and the reduction reaction of oxygen. As the catalyst, there are mentioned, for example, platinum, gold, silver, palladium, iridium, rhodium, ruthenium, tin, iron, cobalt, nickel, molybdenum, tungsten, vanadium and alloys thereof. Of these catalysts, preferred are platinum, ruthenium, and platinum-ruthenium alloy, because these are superior in catalytic activity.

In considering that the catalyst is used in fuel cell, a particularly preferred catalyst is catalyst particles loaded on a carrier made of carbon black (e.g. furnace black or acetylene black) or conductive carbon (e.g. active carbon or graphite).

As the conductive carbon for loading the catalyst thereon, a known conductive carbon is used. As the conductive carbon for catalyst loading, used in the electrode of fuel cell, there are, for example, those described in JP 2002-329500 A, JP 2002-100373 A, JP 1995-246336 A, etc. Further, various catalysts different in loaded catalyst or in carrier are available commercially and they can be used per se or after necessary treatment.

The particle diameters of the catalyst particles are ordinarily 0.1 to 100 nm, preferably 0.5 to 10 nm. Catalyst particles of smaller diameters show a higher catalytic action. However, catalyst particles of smaller than 0.5 nm are difficult to produce. Catalyst particles of larger than 100 nm show an insufficient catalytic activity.

The catalyst content in the catalyst electrode layer is ordinarily 0.01 to 10 mg/cm$^2$, more preferably 0.1 to 5.0 mg/cm$^2$ on the basis of a state that the catalyst electrode layer is in a sheet state. When the catalyst content is smaller than 0.01 mg/cm$^2$, no sufficient catalytic action is exhibited; when the catalyst is loaded in an amount larger than 10 mg/cm$^2$, the catalytic action is at the saturation point.

By forming the catalyst electrode layer constituted by the above components, on the surface of the membrane for fuel cell of the present invention, there can be obtained a membrane-catalyst electrode assembly for fuel cell.

The catalyst electrode layer is formed on the surface of the membrane for fuel cell so as to cover the thin layer of weakly acidic group-containing polymer adhered to the surface of the polymer electrolyte membrane. The thickness of the catalyst electrode layer is preferably 5 to 50 $\mu$m.

In the general method for forming the catalyst electrode layer, a catalyst electrode paste (which is a mixture of the above-mentioned components and an organic solvent) is coated on the surface of the membrane for fuel cell by screen printing or by spraying method, followed by drying. An organic solvent is as necessary added to the catalyst electrode paste, for viscosity adjustment of the paste. The viscosity adjustment is important for the control of amount of catalyst loaded and the control of the thickness of catalyst electrode layer.

The following method is preferred for direct formation of the catalyst electrode layer on the membrane for fuel cell, of the present invention. In the method, first, a catalyst electrode layer is formed on a film of polytetrafluoroethylene or polyester. Then, the catalyst electrode layer is transferred onto the surface of a membrane for fuel cell. In general, the catalyst electrode layer is transferred onto the membrane for fuel cell by hot-pressing the catalyst electrode layer to the membrane for fuel cell using an apparatus having a pressurization and heating means, such as hot press, roll press or the like. The pressing temperature is generally 40°C to 200°C, and the pressing pressure is ordinarily 0.5 to 20 MPa although it differs depending upon the thickness and hardness of the catalyst electrode layer used.

The membrane-catalyst electrode assembly for fuel cell, of the present invention may be produced also by forming a catalyst electrode layer loaded on a porous electrode substrate and then bonding this catalyst electrode layer to the membrane for fuel cell, of the present invention. As specific examples of the porous electrode substrate, there are mentioned carbon fiber woven fabric, carbon paper, etc. The thickness of the electrode substrate is preferably 50

to 300 $\mu$m, and the porosity thereof is preferably 50 to 90%. The above-mentioned catalyst electrode paste is coated on the porous electrode substrate, followed by drying, whereby a catalyst electrode layer loaded on a porous electrode substrate is formed. Then, this catalyst electrode layer is hot-pressed on a membrane for fuel cell, whereby a membrane-catalyst electrode assembly for fuel cell, of the present invention is produced. The conditions of hot-pressing are the same as mentioned previously.

The basic structure of a polymer electrolyte fuel cell, into which the membrane-catalyst electrode assembly for fuel cell of the present invention is assembled, is shown in Fig. 1. The membrane-catalyst electrode assembly for fuel cell, of the present invention can also be assembled into a fuel cell for anion-exchange polymer electrolyte, having other known structure.

The liquid fuel of fuel cell is most generally methanol, ethanol, and aqueous solutions thereof. With these liquid fuels, the effect of the present invention is exhibited most strikingly. Other liquid fuels include ethylene glycol, dimethyl ether, ammonia, hydrazine, etc., and aqueous solutions thereof. Also with these fuels, the membrane-catalyst electrode assembly for fuel cell, of the present invention exhibits the same excellent effect.

When such a liquid fuel is used, a basic compound may be added to the liquid fuel. The basic compound includes, for example, potassium hydroxide, sodium hydroxide, potassium carbonate and sodium hydrogencarbonate. As the fuel, not only a liquid but also a gas (e.g. hydrogen gas) can be used.

## EXAMPLES

The present invention is described more specifically below by way of Examples and Comparative Examples. However, the present invention is in no way restricted to these Examples. Incidentally, the properties of the membranes for fuel cell and membrane-catalyst electrode assemblies for fuel cell, shown in Examples and Comparative Examples are those measured by the following methods.

(1) Ion exchange capacity

A membrane for fuel cell was immersed in a 0.5 mol/L aqueous NaCl solution for at least 10 hours to convert it into a chloride ion form. The membrane of chloride ion form was immersed in a 0.2 mol/L aqueous $NaNO_3$ solution to convert it into a nitrate ion form. The liberated chloride ion was titrated using an aqueous silver nitrate solution (A mol). In the quantitative determination, a potentiometric titrator (COMTITE-900, a product of Hiranuma Sangyo K.K.) was used.

Next, the same ion-exchange membrane was immersed in a 0.5 mol/L aqueous NaCl solution for at least 4 hours. Then, the ion-exchange membrane was taken out and sufficiently washed with deionized water. The deionized water remaining on the membrane was removed and then the wet weight (W g) of the membrane was measured. Then, the membrane was dried at 60°C for 5 hours under reduced pressure and measured for dry weight (D g).

Based on the above measurement data, the ion exchange capacity and water content of the membrane for fuel cell were calculated using the following formulas.

```
Ion exchange capacity =

                   Ax1000/D [mmol/g of dried weight]

Water content = 100x(W-D)/D (%)
```

(2) Membrane resistance

A membrane for fuel cell was placed in the center of a cell comprising two chambers each provided with a platinum black electrode, whereby the two chambers were divided by the membrane. In each chamber was filled a 0.5 mol/L aqueous NaCl solution.

The resistance between the electrodes at 25°C was measured using an AC bridge (frequency: 1,000 cycles/second) circuit. In a similar manner, the resistance between the electrodes was measured without placing the membrane for fuel cell. The resistance of the membrane was calculated from the difference in the resistances between the electrodes, of when the membrane was not placed and when the membrane was placed. The membrane used in the above measurement had been beforehand immersed in a 0.5 mol/L aqueous NaCl solution and equilibrated.

(3) Total adhesion amount of weakly acidic group-containing polymer to polymer electrolyte membrane (solvent immersion method)

There was prepared 40 ml of an equal-mass mixed solution of a 0.5 mol/L aqueous hydrochloric acid solution and methanol. In this solution was immersed, at room temperature for 16 hours, a membrane for fuel cell (8 cm x 8 cm) which was a polymer electrolyte membrane (composed of an anion-exchange membrane) having a weakly acidic group-containing polymer adhered to the both sides, whereby the weakly acidic group-containing polymer was dissolved into the mixed solution. Then, the resulting solution was analyzed by liquid chromatography. The amount of the weakly acidic group-containing polymer dissolved was determined using a calibration curve prepared using a polystyrenesulfonic acid (weight-average molecular weight: 75,000) or a polyacrylic acid (weight-average molecular weight: 250,000) or a polymethacrylic acid (weight-average molecular weight: 9,500). This measurement result was divided by the area (128 $cm^2$) of the both sides of the anion-exchange resin membrane, to calculate the adhesion amount per unit area ($cm^2$) of one side of membrane for fuel cell. This value was taken as the total adhesion amount of weakly acidic group-containing polymer.

(4) Adhesion amount of weakly acidic group-containing polymer to the surface of polymer electrolyte membrane

• ATR method (used when the adhesion amount was 0.001 mg/$cm^2$ or more)
On both side of a germanium optical crystal (20 mm x 50 mm x 3 mm) were placed membrane for fuel cell (10 mm x 45 mm) which were polymer electrolyte membranes (composed of an anion-exchange membrane) having a weakly acidic group-containing polymer adhered to the both sides, to prepare a sample for measurement. Total reflection absorption spectroscopy was conducted in an atmosphere of 25°C and 50% RH to measure the multiple reflection infrared spectrum of the sample at an incident angle of 45°. In the measurement, an infrared spectrometer (Spectrum One, a product of Perkin Elmer) was used.
Incidentally, in the above measurement, the counter ion of the anion-exchange membrane having a weakly acidic group-containing polymer adhered thereto was ion-exchanged to hydroxide ion and, immediately, was placed in a glove box containing an atmosphere of nitrogen gas substantially free from carbon dioxide, and the measurement was conducted in the glove box.
Meanwhile, a given amount of a polystyrenesulfonic acid (weight-average molecular weight: 75,000) or a polyacrylic acid (weight-average molecular weight: 250,000) or a polymethacrylic acid (weight-average molecular weight: 9,500) was coated on a polyethylene terephthalate film, to prepare a standard sample. Using this standard sample, the same measurement was conducted to measure the absorption intensity based on the characteristic absorption of sulfonic group (1,177 $cm^{-1}$) or carbonyl group (1,760 $cm^{-1}$). Using these data, a calibration curve was prepared. Using this calibration curve, there was determined the adhesion amount per unit area ($cm^2$) of the weakly acidic group-containing polymer at the surface of the membrane for fuel cell.
  • Application method of solvent immersion method (used when the adhesion amount was less than 0.001 mg/$cm^2$)
First, the solvent immersion method explained in the above

(3) was conducted to determine the total adhesion amount of the weakly acidic group-containing polymer in this state.

Then, the membrane for fuel cell was separately cut out from the same sample. On each side of the membrane having a weakly acidic group-containing polymer adhered thereto was sprayed an alumina oxide powder, to scrape the surface layer of the membrane for fuel cell. The thickness of the surface layer scraped was 1 $\mu$m (each side) including the layer to which the weakly acidic group-containing polymer adhered. Then, the solvent immersion method was again conducted for the surface layer-removed membrane, to determine the adhesion amount of the weakly acidic group-containing polymer, whereby the substantial amount of the weakly acidic group-containing polymer penetrated into the surface layer-removed membrane for fuel cell was determined.
The total adhesion amount after the scraping of surface layer was subtracted from the total adhesion amount before the scraping of surface layer, to calculate the adhesion amount of the weakly acidic group-containing polymer to the membrane surface.
Incidentally, using the membranes for fuel cell produced in Examples 6 and 8 both described later, there was compared the adhesion amount of the weakly acidic group-containing polymer to the surface of the polymer electrolyte membrane, determined by the application method of solvent immersion method, with the adhesion amount determined by the ATR method. The adhesion amount determined by the former method was 0.0013 mg/$cm^2$ in Example 6 and 0.0015 mg/$cm^2$ in Example 8. Meanwhile, the adhesion amounts in these Examples, determined by the ATR method were completely the same as the above adhesion amounts, as indicated in Table 4 described later. From this result, it was confirmed that, in the measurement of the adhesion amount of the weakly acidic group-containing polymer to the electrolytic membrane surface, the two methods gave substantially the same measurement results.

(5) Adhesion amount of weakly acidic group-containing polymer to the surface of polymer electrolyte membrane after immersion in 50 mass % aqueous methanol solution

A membrane for fuel cell (8 cm x 8 cm) having a weakly acidic group-containing polymer adhered to the surface was immersed in 50 ml of a 50 mass % aqueous methanol solution of 30°C, at room temperature for 30 minutes. The membrane was taken out from the aqueous methanol solution. The same immersion operation was repeated twice each time using a fresh aqueous methanol solution. Then, the membrane was dried at room temperature for 5 hours. Then, the adhesion amount of the weakly acidic group-containing polymer was measured using the ATR method or the application method of solvent immersion method, both explained in (4), to determine the adhesion amount of the weakly acidic group-containing polymer to the surface of electrolytic membrane after immersion in aqueous methanol solution.

(6) Bondability

A membrane-catalyst electrode assembly for fuel cell right after production was subjected to a tape peeling test in accordance with the X-cut tape peeling test of JIS K 5400. After peeling of the tape, the condition of the electrode layer remaining on the ion-exchange membrane was observed visually and rated according to a 10-point method. The result was taken as bondability right after production.
Meanwhile, in the later-described output voltage test using a hydrogen or direct methanol fuel cell, the membrane-catalyst electrode assembly for fuel cell was taken out from the cell which had been subjected to durability rating. This assembly was used as a sample and subjected to the above-mentioned tape peeling test (in the membrane-electrode assembly used in the direct methanol fuel cell, its liquid fuel electrode side was a peeling test side), to rate its bondability.

(7) Output voltage of direct methanol fuel cell

A membrane-catalyst electrode assembly for fuel cell was interposed between two same carbon papers each having a thickness of 200 $\mu$m and a porosity of 80%, and they were made into a fuel cell having a structure shown in Fig. 1. Then, the temperature of the fuel cell was set at 50°C. A 10 mass % aqueous methanol solution was fed into the fuel electrode side at a flow rate of 1 ml/min; air of atmospheric pressure was fed into the oxidant electrode side at a flow rate of 200 ml/min; and a power generation test was conducted. In this state, terminal voltages of the cell at current densities of 0 A/cm$^2$ and 0.1 A/cm$^2$ were measured.

(8) Output voltage of hydrogen fuel cell

A membrane-catalyst electrode assembly for fuel cell was interposed between two same carbon papers each having a thickness of 200 $\mu$m and a porosity of 80%, and they were made into a fuel cell having a structure shown in Fig. 1. Then, the temperature of the fuel cell was set at 50°C. Hydrogen and air both of substantially saturated humidity at atmospheric pressure (substantially 100% RH) were fed at flow rates of 200 ml/min and 500 ml/min, respectively, and a power generation test was conducted. Terminal voltages of the cell at current densities of 0 A/cm$^2$ and 0.2 A/cm$^2$ were measured.

(9) Durability rating

After the above measurement of the output voltage of each fuel cell, a continuous power generation test was conducted at 50°C and 0.2 A/cm$^2$ in the case of the hydrogen fuel cell and at 50°C and 0.1 A/cm$^2$ in the case of the direct methanol fuel cell. The output voltages after 350 hours were measured. With these measurement values, the durability of the membrane-catalyst electrode assembly for fuel cell was rated.

Production Example 1

As shown in Table 1, there was prepared a monomers composition comprising 100 mass parts of chloromethylstyrene, 3 mass parts (3.5 mol % of the total polymerizable monomers) of divinylbenzene, 5 mass parts of a polyethylene glycol diepoxide (molecular weight: 400) and 5 mass parts of tert-butyl peroxyethylhexanoate. In this monomers composition was immersed, at 25°C for 10 minutes under atmospheric pressure, a porous membrane (thickness: 25 $\mu$m, porosity: 37%, average pore diameter: 0.03 $\mu$m) made of a polyethylene (PE, weight-average molecular weight: 250,000) to infiltrate the monomers composition into the porous membrane.
The porous membrane was taken out from the monomers composition and covered, at the both sides, with a polyester film (a peeling material) of 100 $\mu$m in thickness. Then, the covered porous membrane was heated at a nitrogen pressure of 0.3 MPa at 80°C for 5 hours to polymerize the infiltrated monomers composition.

The membrane-shaped material obtained was immersed in an amination bath (containing 10 mass parts of trimethylamine (30 mass %), 5 mass parts of water and 5 mass parts of acetone) at room temperature for 16 hours to obtain a quaternary ammonium type anion-exchange membrane of chloride ion form. Then, the anion-exchange membrane obtained was immersed in a large excess of a 0.5 mol/L aqueous NaOH solution to ion-exchange the counter ion from chloride ion to hydroxide ion. Then, the membrane was washed with deionized water to obtain an anion-exchange membrane of hydroxide ion form.

The anion-exchange membrane obtained was measured for ion exchange capacity, water content, membrane resistance and membrane thickness. The results are shown in Table 2.

Production Examples 2 to 3

Anion-exchange membranes were obtained in the same manner as in Production Example 1 except that the monomers composition and porous membrane of Production Example 1 were changed to those shown in Table 1. The anion-exchange membranes were measured for ion exchange capacity, water content, membrane resistance and membrane thickness. The results are shown in Table 2.

Production Example 4

100 mass parts of 4-vinylpyridine, 5 mass parts (3.9 mol % of the total polymerizable monomers) of divinylbenzene and 5 mass parts of tert-butyl peroxyethylhexanoate were mixed to prepare a monomers composition. In this monomers composition was immersed, at 25°C for 10 minutes under atmospheric pressure, a porous membrane (thickness: 25 $\mu$m, porosity: 37%, average pore diameter: 0.03 $\mu$m) made of a polyethylene (PE, weight-average molecular weight: 250,000) to infiltrate the monomers composition into the porous membrane.

The porous membrane was taken out from the monomers composition and covered, at the both sides, with a polyester film (a peeling material) of 100 $\mu$m in thickness. Then, the covered porous membrane was heated at a nitrogen pressure of 0.3 MPa at 80°C for 5 hours to polymerize the infiltrated monomers composition. The membrane-shaped material obtained was immersed in a 1:4 mixture of methyl iodide and methanol at 30°C for 24 hours to obtain a quaternary pyridinium type anion-exchange membrane of iodide ion form. The ion-exchange membrane was immersed in a large excess of a 0.5 mol/L aqueous NaOH solution to ion-exchange the counter ion from iodide ion to hydroxide ion. Then, the membrane was washed with deionized water to obtain an anion-exchange membrane of hydroxide ion form.

The anion-exchange membrane obtained was measured for ion exchange capacity, water content, membrane resistance and membrane thickness. The results are shown in Table 2.

Table 1

| Production Example | Substrate membrane | Formulation (mass parts) | | | | | DVB proportion (Relative to mono-functional monomer, mol %) |
|---|---|---|---|---|---|---|---|
| | | CMS | 4VP | DVB | PO | Epoxy compound | |
| 1 | A | 100 | 0 | 3 | 5 | 5 | 3.5 |
| 2 | A | 100 | 0 | 10 | 5 | 5 | 11.7 |
| 3 | B | 100 | 0 | 3 | 5 | 5 | 3.5 |
| 4 | A | 0 | 100 | 5 | 0 | 0 | 2.4 |

• Substrate membrane
A: a porous film made of a polyethylene having a weight-average molecular weight of 250,000; membrane thickness: 25 $\mu$m; average pore diameter: 0.03 $\mu$m; porosity: 37%
B: a porous film made of a polyethylene having a weight-average molecular weight of 200,000; membrane thickness: 9 $\mu$m; average pore diameter: 0.03 $\mu$m; porosity: 35%
• CMS: chloromethylstyrene
• 4VP: 4-vinylpyridine
• DVB: divinylbenzene
• PO: tert-butyl peroxyethylhexanoate
• Epoxy compound: Epolite 40 E, a product of Kyoeisha Chemical Co. Ltd.

Table 2

| Production Example | Ion exchange capacity (mmol/g -dried membrane) | Water content (%) | Membrane resistance ($\Omega \cdot cm^2$) | Membrane thickness ($\mu m$) |
|---|---|---|---|---|
| 1 | 1.8 | 26 | 0.30 | 28 |
| 2 | 1.5 | 20 | 1.10 | 28 |
| 3 | 1.7 | 25 | 0.11 | 10 |
| 4 | 2.1 | 30 | 0.30 | 28 |

Example 1

The anion-exchange membrane of Production Example 1 was immersed in a methanol solution containing 0.1 mass % of a polyacrylic acid (weight-average molecular weight: 250,000) at room temperature for 15 minutes. The anion-exchange membrane was taken out from the methanol solution of polyacrylic acid, and dried for 16 hours at 25°C under atmospheric pressure and further at 40°C for 5 hours under reduced pressure, to obtain a membrane for fuel cell, of the present invention. The obtained membrane for fuel cell was measured for anion exchange capacity, water content, membrane resistance, membrane thickness, and adhesion amount of polyacrylic acid (weakly acidic group-containing polymer), and they are shown in Table 4.

Separately, there was coated, on a polytetrafluoroethylene sheet, a mixture of a carbon black having 50 mass % of platinum loaded thereon and a tetrahydrofuran/1-propanol solution containing 5 mass % of a chloromethylated [polystyrene-poly(ethylene-propylene)-polystyrene] triblock copolymer of quaternary ammonium form so that the catalyst amount became 3 mg/cm$^2$. Drying was conducted at 80°C for 4 hours under reduced pressure, to produce a catalyst electrode layer of oxidant chamber side to which air was to be fed.

Incidentally, the chloromethylated [polystyrene-poly(ethylene-propylene)-polystyrene] triblock copolymer of quaternary ammonium form was obtained by subjecting a [polystyrene-poly(ethylene-propylene)-polystyrene] triblock copolymer to chloromethylation, converting the chloromethylation product into a quaternary ammonium form, ion-exchanging the counter ion of the anion exchange resin obtained into hydroxide ion, and allowing the product to stand in the air.

Meanwhile, there was produced a catalyst electrode layer of fuel chamber side containing a catalyst of 3 mg/cm$^2$, in the same manner except that there was used a carbon black having 50 mass % of a platinum-ruthenium alloy catalyst (ruthenium: 50 mol %) loaded thereon.

Then, the above two catalyst electrode layers were set on the two sides of the above membrane for fuel cell, and they were hot-pressed at 100°C at an applied pressure of 5 MPa for 100 seconds, to obtain a membrane-catalyst electrode assembly for direct methanol fuel cell. The obtained membrane-catalyst electrode assembly for fuel cell was rated for bondability. Using the membrane-catalyst electrode assembly for fuel cell, a direct methanol fuel cell was produced and measured for output voltage, durability, and bondability after durability test. The results are shown in Table 4.

In the same manner, there was produced a catalyst electrode layer containing 0.5 mg/cm$^2$ of a platinum catalyst. Using this catalyst electrode layer as a catalyst electrode layer of oxidant chamber side and also as a catalyst electrode layer of fuel chamber side, there was produced a membrane-catalyst electrode assembly for hydrogen fuel cell.

The obtained membrane-catalyst electrode assembly for fuel cell was rated for bondability. Using the membrane-catalyst electrode assembly for fuel cell, a hydrogen fuel cell was produced and measured for output voltage, durability, and bondability after durability test. The results are shown in Table 5.

Example 2

A membrane for fuel cell was obtained in the same manner as in Example 1 except that the concentration of the polyacrylic acid solution was changed as shown in Table 3. The membrane for fuel cell was measured for anion exchange capacity, water content, membrane resistance, membrane thickness, and adhesion amount of polyacrylic acid (weakly acidic group-containing polymer), and they are shown in Table 4.

Using the membrane for fuel cell, a membrane-catalyst electrode assembly for direct methanol fuel cell was produced in the same manner as in Example 1. The membrane-catalyst electrode assembly for fuel cell was rated for bondability. Using the membrane-catalyst electrode assembly for fuel cell, a direct methanol fuel cell was produced and measured for output voltage, durability, and bondability after durability test. The results are shown in Table 4.

Example 3

A membrane for fuel cell was produced in the same manner as in Example 1 and then immersed in methanol at room temperature for 30 minutes. Then, the same immersion was conducted two times in total each time using fresh methanol, followed by drying at room temperature for 5 hours, to obtain a membrane for fuel cell, of the present invention. The membrane for fuel cell was measured for anion exchange capacity, water content, membrane resistance, membrane thickness, and adhesion amount of polyacrylic acid (weakly acidic group-containing polymer), and they are shown in Table 4.

A membrane-catalyst electrode assembly for direct methanol fuel cell was produced in the same manner as in Example 1. The membrane-catalyst electrode assembly for fuel cell was rated for bondability. The assembly was made into a direct methanol fuel cell and measured for output voltage, durability, and bondability after durability test. The results are shown in Table 4. Also, in the same manner as in Example 1, a membrane-catalyst electrode assembly for hydrogen fuel cell was produced and measured for bondability. The assembly was made into a hydrogen fuel cell and measured for output voltage, durability, and bondability after durability test. The results are shown in Table 5.

Examples 4 to 10

The membranes for fuel cell were obtained in the same manner as in Example 3 except that the anion-exchange membrane, the kind of weakly acidic group-containing polymer the weight-average molecular weight of weakly acidic group-containing polymer, and the concentration of weakly acidic group-containing polymer solution were changed as shown in Table 3. The obtained membranes for fuel cell were measured for anion exchange capacity, water content, membrane resistance, membrane thickness, and adhesion amount of weakly acidic group-containing polymer, and they are shown in Table 4.

Then, membrane-catalyst electrode assemblies for direct methanol fuel cell were obtained in the same manner as in Example 1. The membrane-catalyst electrode assemblies for fuel cell were rated for bondability. The assemblies were each made into a direct methanol fuel cell and measured for output voltage, durability, and bondability after durability test. The results are shown in Table 4. Also, as to each of Examples 5 and 9, a membrane-catalyst electrode assembly for hydrogen fuel cell was produced in the same manner as in Example 1 and measured for bondability. Each assembly was made into a hydrogen fuel cell and measured for output voltage, durability, and bondability after durability test. The results are shown in Table 5.

Comparative Examples 1 to 2

Using each of the anion-exchange membranes produced in Production Example 1 and Production Example 4, per se as a membrane for fuel cell, membrane-catalyst electrode assemblies for fuel cell were obtained in the same manner as in Example 1. The membrane-catalyst electrode assemblies for fuel cell were measured for bondability. The assemblies were each made into a direct methanol fuel cell and measured for output voltage, durability, and bondability after durability test. The results are shown in Table 4. Also, membrane-catalyst electrode assemblies for hydrogen fuel cell were produced in the same manner as in Example 1 and measured for bondability. Each assembly was made into a hydrogen fuel cell and measured for output voltage, durability, and bondability after durability test. The results are shown in Table 5.

Comparative Examples 3 to 4

The membranes for fuel cell were obtained in the same manner as in Example 3 except that the weakly acidic group-containing polymer was changed to a polystyrenesulfonic acid and the solution concentration was changed as shown in Table 3. The membranes for fuel cell were measured for anion exchange capacity, water content, membrane resistance, membrane thickness and adhesion amount of weakly acidic group-containing polymer. The results are shown in Table 4. Further, in the same manner as in Example 1, membrane-catalyst electrode assemblies for direct methanol fuel cell were obtained. The obtained membrane-catalyst electrode assemblies for direct methanol fuel cell were measured for bondability. Each assembly was made into a direct methanol fuel cell and measured for output voltage, durability, and bondability after durability test. The results are shown in Table 4. Also, membrane-catalyst electrode assemblies for hydrogen fuel cell were produced in the same manner as in Example 1 and measured for bondability. Each assembly was made into a hydrogen fuel cell and measured for output voltage, durability, and bondability after durability test. The results are shown in Table 5.

Comparative Example 5

A membrane for fuel cell was obtained in the same manner as in Example 3 except that a solution obtained by adding 1-propanol to a perfluorocarbonsulfonic acid solution (commercial product A) for concentration control was used in place of the weakly acidic-containing polymer and that methanol was used for washing. The obtained membrane for fuel cell was measured for anion exchange capacity, water content, membrane resistance, membrane thickness, and adhesion amount of polymer of opposite polarity. The results are shown in Table 4.

A membrane-catalyst electrode assembly for direct methanol fuel cell was obtained in the same manner as in Example 1. The membrane-catalyst electrode assembly for direct methanol fuel cell was measured for bondability. The assembly was made into a direct methanol fuel cell and measured for output voltage, durability, and bondability after durability test. The results are shown in Table 4. Also, a membrane-catalyst electrode assembly for hydrogen fuel cell was obtained in the same manner as in Example 1. The membrane-catalyst electrode assembly for direct methanol fuel cell was measured for bondability. The assembly was made into a hydrogen fuel cell and measured for output voltage, durability, and bondability after durability test. The results are shown in Table 5.

Table 3

| Example | Anion-exchange membrane | Kind of weakly acidic group-containing polymer | Weight-average molecular weight of weakly acidic group-containing polymer | Concentration of weakly acidic group-containing polymer solution (wt. %) | Washing |
|---|---|---|---|---|---|
| 1 | Production Example 1 | PAA | 250,000 | 0.1 | No |
| 2 | Production Example 1 | PAA | 250,000 | 0.5 | No |
| 3 | Production Example 1 | PAA | 250,000 | 0.1 | Yes |
| 4 | Production Example 1 | PAA | 250,000 | 0.03 | Yes |
| 5 | Production Example 1 | PAA | 250,000 | 0.5 | Yes |
| 6 | Production Example 1 | PAA | 25,000 | 0.1 | Yes |
| 7 | Production Example 2 | PAA | 250,000 | 0.1 | Yes |
| 8 | Production Example 3 | PAA | 250,000 | 0.1 | Yes |
| 9 | Production Example 4 | PAA | 250,000 | 0.1 | Yes |
| 10 | Production Example 1 | PMA | 9,500 | 0.1 | Yes |
| Comparative Example 1 | Production Example 1 | Not used | - | - | - |
| Comparative Example 2 | Production Example 4 | Not used | - | - | - |
| Comparative Example 3 | Production Example 1 | PSSA | 75,000 | 0.1 | Yes |
| Comparative Example 4 | Production Example 1 | PSSA | 75,000 | 0.5 | Yes |

(continued)

| Example | Anion-exchange membrane | Kind of weakly acidic group-containing polymer | Weight-average molecular weight of weakly acidic group-containing polymer | Concentration of weakly acidic group-containing polymer solution (wt. %) | Washing |
|---|---|---|---|---|---|
| Comparative Example 5 | Production Example 1 | Commercial product A | 150,000 | 0.2 | Yes |

• PAA: a polyacrylic acid
• PMA: a polymethacrylic acid
• PSSA: a sulfonated polystyrene
• Commercial product A: a perfluorocarbonsulfonic acid

Table 4

| Example | Anion exchange capacity (mmol/g-dried membrane) | Water con-tent (%) | Membrane resistance ($\Omega\cdot cm^2$) | Membrane thickness ($\mu m$) | Adhesion amount of weakly acidic group-containing polymer (mg/cm$^2$) | | | Results of power generation test and durability rating in methanol fuel system | | | | Durability after 350-hr power generation (V) |
|---|---|---|---|---|---|---|---|---|---|---|---|---|
| | | | | | Surface | | Total amount | Bondability (point) | | Output voltage of fuel cell (V) | | |
| | | | | | Before methanol immersion | After methanol immersion | | Right after produc-tion | After 350-hr power generation | 0 A/cm$^2$ | 0.1 A/cm$^2$ | |
| | | | | | | | | | | | | 0.1A/cm$^2$ |
| 1 | 1.8 | 26 | 0.31 | 28 | 0.0083 | 0.0015 | 0.0083 | 10 | 8 | 0.66 | 0.15 | 0.09 |
| 2 | 1.8 | 26 | 0.32 | 28 | 0.070 | 0.0021 | 0.070 | 10 | 8 | 0.65 | 0.14 | 0.08 |
| 3 | 1.8 | 26 | 0.31 | 28 | 0.0015 | 0.0014 | 0.0015 | 10 | 8 | 0.66 | 0.16 | 0.13 |
| 4 | 1.8 | 26 | 0.30 | 28 | 0.0006* | 0.0006* | 0.0006* | 10 | 8 | 0.66 | 0.16 | 0.12 |
| 5 | 1.8 | 26 | 0.31 | 28 | 0.0021 | 0.0020 | 0.0021 | 10 | 8 | 0.66 | 0.17 | 0.13 |
| 6 | 1.8 | 26 | 0.31 | 28 | 0.0013 | 0.0013 | 0.0013 | 10 | 8 | 0.66 | 0.17 | 0.14 |
| 7 | 1.5 | 20 | 1.10 | 28 | 0.0011 | 0.0011 | 0.0011 | 10 | 8 | 0.64 | 0.12 | 0.09 |
| 8 | 1.7 | 25 | 0.11 | 10 | 0.0015 | 0.0015 | 0.0015 | 10 | 8 | 0.66 | 0.18 | 0.14 |
| 9 | 2.1 | 30 | 0.31 | 28 | 0.0017 | 0.0016 | 0.0017 | 10 | 8 | 0.65 | 0.16 | 0.13 |
| 10 | 1.8 | 26 | 0.32 | 28 | 0.0007* | 0.0007* | 0.0027* | 10 | 8 | 0.66 | 0.15 | 0.09 |
| Comp. Ex 1 | 1.8 | 26 | 0.30 | 28 | - | - | - | 0 | 0 | 0.65 | 0.15 | 0.03 |
| Comp. Ex 2 | 2.1 | 30 | 0.30 | 28 | - | - | - | 0 | 0 | 0.64 | 0.13 | 0.03 |
| Comp. Ex 3 | 1.8 | 26 | 0.31 | 28 | 0.0019 | 0.0015 | 0.0019 | 10 | 6 | 0.66 | 0.16 | 0.06 |

(continued)

| Example | Anion exchange capacity (mmol/g-dried membrane) | Water con-tent (%) | Membrane resistance ($\Omega \cdot cm^2$) | Membrane thickness ($\mu m$) | Adhesion amount of weakly acidic group-containing polymer (mg/cm$^2$) | | | Results of power generation test and durability rating in methanol fuel system | | | | |
|---|---|---|---|---|---|---|---|---|---|---|---|---|
| | | | | | Surface | | Total amount | Bondability (point) | | Output voltage of fuel cell (V) | | Durability after 350-hr power generation (V) |
| | | | | | Before methanol immersion | After methanol immersion | | Right after produc-tion | After 350-hr power generation | 0 A/cm$^2$ | 0.1 A/cm$^2$ | 0.1A/cm$^2$ |
| Comp. Ex 4 | 1.8 | 26 | 0.31 | 28 | 0.0025 | 0.0021 | 0.0025 | 10 | 6 | 0.66 | 0.16 | 0.05 |
| Comp. Ex. 5 | 1.8 | 26 | 0.31 | 28 | 0.0026 | 0.0021 | 0.0026 | 10 | 6 | 0.66 | 0.16 | 0.06 |
| * Measured by the application method of solvent immersion method (All data other than those having a * mark were obtained by the ATR method) | | | | | | | | | | | | |

Table 5

| Example | Anion exchange capacity (mmol/g-dried membrane) | Water con-tent (%) | Membrane resistance ($\Omega \cdot cm^2$) | Membrane thickness ($\mu m$) | Adhesion amount of weakly acidic group-containing polymer ($mg/cm^2$) | | | Results of power generation test and durability rating in hydrogen fuel system | | | | Durability after 350-hr power generation (V) |
|---|---|---|---|---|---|---|---|---|---|---|---|---|
| | | | | | Surface | | Total amount | Bondability (point) | | Output voltage of fuel cell (V) | | |
| | | | | | Before methanol immersion | After methanol immersion | | Right after produc-tion | After 350-hr power generation | 0 A/cm$^2$ | 0.2 A/cm$^2$ | 0.2 A/cm$^2$ |
| 1 | 1.8 | 26 | 0.32 | 28 | 0.0083 | 0.0016 | 0.0083 | 10 | 8 | 0.85 | 0.16 | 0.11 |
| 3 | 1.8 | 26 | 0.31 | 28 | 0.0015 | 0.0014 | 0.0015 | 10 | 8 | 0.85 | 0.17 | 0.15 |
| 5 | 1.8 | 26 | 0.31 | 28 | 0.0021 | 0.0020 | 0.0021 | 10 | 8 | 0.85 | 0.18 | 0.15 |
| 9 | 2.1 | 30 | 0.31 | 28 | 0.0017 | 0.0016 | 0.0017 | 10 | 8 | 0.83 | 0.16 | 0.13 |
| Comp. Ex 1 | 1.8 | 26 | 0.30 | 28 | - | - | - | 0 | 0 | 0.85 | 0.16 | 0.06 |
| Comp. Ex 2 | 2.1 | 30 | 0.30 | 28 | - | - | - | 0 | 0 | 0.83 | 0.15 | 0.04 |
| Comp. Ex 3 | 1.8 | 26 | 0.31 | 28 | 0.0019 | 0.0015 | 0.0019 | 10 | 6 | 0.85 | 0.16 | 0.09 |

**Claims**

1. A membrane for fuel cell, which comprises
   a polymer electrolyte membrane comprising a cross-linked anion-exchange resin having a strongly basic anion-exchange group, and
   a polymer having a weakly acidic group, adhered to at least one side of the polymer electrolyte membrane.

2. A membrane for fuel cell, which comprises
   a polymer electrolyte membrane comprising a porous membrane and a cross-linked anion-exchange resin having a strongly basic anion-exchange group, filled in the voids of the porous membrane, and
   a polymer having a weakly acidic group, adhered to at least one side of the polymer electrolyte membrane.

3. The membrane for fuel cell according to Claim 1 or 2, wherein the weight-average molecular weight of the polymer having a weakly acidic group is 8,000 to 1,000,000.

4. The membrane for fuel cell according to Claim 1 or 2, wherein the adhesion amount of the polymer having a weakly acidic group is 0.0001 to 0.5 mg/cm$^2$.

5. The membrane for fuel cell according to Claim 1 or 2, wherein the weakly acidic group of the polymer having a weakly acidic group is carboxyl group.

6. The membrane for fuel cell according to Claim 1 or 2, wherein the polymer having a weakly acidic group is a polyacrylic acid.

7. The membrane for fuel cell according to Claim 1 or 2, wherein the strongly basic group of the cross-linked anion-exchange resin having a strongly basic anion-exchange group is a quaternary ammonium salt group or a pyridinium salt group.

8. The membrane for fuel cell according to Claim 1 or 2, wherein the polymer having a weakly acidic group is adhered to at least one side of the polymer electrolyte membrane in such a state that the adhesion amount of the polymer does not differ substantially before and after the immersion of the membrane for fuel cell in a 50 mass % aqueous alcohol solution of 30°C.

9. The membrane for fuel cell according to Claim 1 or 2, wherein the cross-linked anion-exchange resin having a strongly basic anion-exchange group is obtained by polymerizing a monomers composition which contains an at least bifunctional cross-linkable monomer in an amount of 0.5 to 40 mol % relative to the total polymerizable monomers.

10. The membrane for fuel cell according to Claim 1 or 2, which is used in a direct liquid fuel cell.

11. A membrane-catalyst electrode assembly for fuel cell, which comprises
    a membrane for fuel cell according to Claim 1 or 2, and
    a catalyst electrode layer bonded to at least one side of the membrane, comprising an anion-exchange resin having a strongly basic anion-exchange group and a catalyst substance.

12. A method for producing a membrane for fuel cell, **characterized by** contacting at least one side of a polymer electrolyte membrane comprising a cross-linked anion-exchange resin having a strongly basic anion-exchange group, with a solution of a polymer having a weakly acidic group, followed by drying, to adhere the polymer having a weakly acidic group to the surface of the polymer electrolyte membrane.

13. A method for producing a membrane for fuel cell, **characterized by** contacting at least one side of a polymer electrolyte membrane comprising a porous membrane and a cross-linked anion-exchange resin having a strongly basic anion-exchange group, filled in the voids of the porous membrane, with a solution of a polymer having a weakly acidic group, followed by drying, to adhere the polymer having a weakly acidic group to the surface of the polymer electrolyte membrane.

14. A method for producing a membrane for fuel cell wherein a polymer having a weakly acidic group is adhered to the surface of a ⊖ polymer electrolyte membrane, which method is **characterized by** contacting at least one side of a polymer electrolyte membrane comprising a cross-linked anion-exchange resin having a strongly basic anion-exchange group, with a solution of a polymer having a weakly acidic group and then washing the polymer electrolyte membrane having the polymer having a weakly acidic group, adhered to the surface, using a solvent capable of dissolving the polymer having a weakly acidic group.

15. A method for producing a membrane for fuel cell wherein a polymer having a weakly acidic group is adhered to the surface of a polymer electrolyte membrane, which method is **characterized by** contacting at least one side of a polymer electrolyte membrane comprising a porous membrane and a cross-linked anion-exchange resin having a strongly basic anion-exchange group, filled in the voids of the porous membrane, with a solution of a polymer having a weakly acidic group and then washing the polymer electrolyte membrane having the polymer having a weakly acidic group, adhered to the surface, using a solvent capable of dissolving the polymer having a weakly acidic group.

[Fig. 1]

Fig. 1

## INTERNATIONAL SEARCH REPORT

| International application No. |
|---|
| PCT/JP2009/061011 |

A.  CLASSIFICATION OF SUBJECT MATTER
H01M8/02(2006.01)i, H01M8/10(2006.01)i

According to International Patent Classification (IPC) or to both national classification and IPC

B.  FIELDS SEARCHED

Minimum documentation searched (classification system followed by classification symbols)
H01M8/02, H01M8/10

Documentation searched other than minimum documentation to the extent that such documents are included in the fields searched
Jitsuyo Shinan Koho          1922–1996     Jitsuyo Shinan Toroku Koho    1996–2009
Kokai Jitsuyo Shinan Koho    1971–2009     Toroku Jitsuyo Shinan Koho    1994–2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2008-204647 A  (The Nippon Synthetic Chemical Industry Co., Ltd.), 04 September, 2008 (04.09.08), Claims; Par. Nos. [0009] to [0047] (Family: none) | 1-3,7,11 |
| X | WO 2007/004716 A1  (Tokuyama Corp.), 11 January, 2007 (11.01.07), Claims; page 11, lines 12 to 15; page 15, lines 12 to 27; page 17, lines 9 to 13; page 29, line 23 to page 30, line 21; page 38, line 21 to page 39, line 9; page 47, line 18 to page 48, line 6 & JP 2007-42617 A        & JP 2007-123259 A & EP 1901379 A1 | 1-3,7,11 |

| ☒ | Further documents are listed in the continuation of Box C. | ☐ | See patent family annex. |
|---|---|---|---|

*      Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search 03 September, 2009 (03.09.09) | Date of mailing of the international search report 15 September, 2009 (15.09.09) |
|---|---|
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/061011 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2000-251906 A (Director General, Agency of Industrial Science and Technology), 14 September, 2000 (14.09.00), Claims; Par. Nos. [0007] to [0011] (Family: none) | 1-3,7,11 |
| A | JP 7-335233 A (Toyota Central Research and Development Laboratories, Inc.), 22 December, 1995 (22.12.95), Full text (Family: none) | 1-3,7,11 |
| A | JP 2005-209437 A (JSR Corp.), 04 August, 2005 (04.08.05), Full text (Family: none) | 1-3,7,11 |

Form PCT/ISA/210 (continuation of second sheet) (April 2007)

## INTERNATIONAL SEARCH REPORT

International application No.

PCT/JP2009/061011

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

   A group of claimed inventions can be considered to comply with the requirement of unity of invention only when there is a special technical feature which so links the group of inventions as to form a single general inventive concept. It appears that only a matter that links the inventions of claims 1-15 is a matter "a separation membrane for a fuel cell, which comprises a solid polymer electrolyte membrane comprising an cross-linked anion-exchange resin having a strongly basic anion-exchange group and a polymer adhered on at least one surface of the solid polymer electrolyte membrane and having a weakly acidic group".
   (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   1-3, 7, 11

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/061011 |

Continuation of Box No.III of continuation of first sheet(2)

However, this matter is already disclosed in a document JP 2008-204647 A (The Nippon Synthetic Chemical Industry Co., Ltd.) (04 September, 2008 (04.09.08)), and therefore cannot be regarded as a special technical feature. Consequently, it is obvious that the inventions of claims 1-15 do not comply with the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11135137 A
- JP 11273695 A
- JP 2000331693 A
- WO 2007004716 A
- JP 9216964 A
- JP 9235399 A
- JP 2002338721 A
- JP 2003377454 A
- JP 2002329500 A
- JP 2002100373 A
- JP 7246336 A